# EUROPEAN PATENT SPECIFICATION

(11) **EP 4 357 892 B1**
(45) Date of publication and mention of the grant of the patent: **31.12.2025**
(21) Application number: 22851625.8
(22) Date of filing: 26.04.2022
(51) Int. Cl.: G06F 3/0481

(54) **DESKTOP MANAGEMENT METHOD FOR TERMINAL DEVICE, AND TERMINAL DEVICE**
DESKTOPVERWALTUNGSVERFAHREN FÜR ENDGERÄTEVORRICHTUNG UND ENDGERÄTEVORRICHTUNG
PROCÉDÉ DE GESTION DE BUREAU POUR UN DISPOSITIF TERMINAL, ET DISPOSITIF TERMINAL

(30) Priority: 03.08.2021 CN 202110884058
(43) Date of publication of application: 24.04.2024
(73) Proprietor: Honor Device Co., Ltd., Shenzhen, Guangdong 518040 (CN)
(72) Inventor: WANG, Xiaoyang, Shenzhen, Guangdong 518040 (CN)
(74) Representative: Beder, Jens
(86) International application number: PCT/CN2022/089232
(87) International publication number: WO 2023/010903

(56) References cited:
- CN-A- 103 092 494
- CN-A- 110 531 904
- CN-A- 112 087 545
- CN-A- 113 325 985
- US-A1- 2015 293 683
- US-A1- 2017 357 495

## Description

The present application claims priority to Chinese Patent Application CN 113 325 985 A (Application No. 202110884058.7), filed with China National Intellectual Property Administration on August 3, 2021 and entitled "TERMINAL DEVICE DESKTOP MANAGEMENT METHOD AND TERMINAL DEVICE".

### TECHNICAL FIELD

The present application relates to the field of terminals, and in particular, to a terminal device desktop management method and a terminal device.

### BACKGROUND

Currently, when using a computer, a user may use a touchpad or a mouse to control a pointer on a desktop to operate the desktop. If a screen of the computer is a touchscreen, the user may also tap the touchscreen to operate the desktop. When the user operates the desktop, a strip-shaped taskbar below the desktop may display an application opened by the user, and may further display function buttons of an application list, a notification center, and a control center, and the like.

When the user frequently uses the function buttons of the application list, the notification center, and the control center, the user needs to perform back-and-forth operations on regions in which the function buttons of the application list, the notification center, and the control center are located, and the pointer needs to be moved back and forth by a relatively large distance.

Therefore, when the user uses the computer and manages windows of a plurality of applications, the control center, and the notification center at the same time, there is a problem of a relatively long movement distance, which is inconducive to user experience.

US 2015/293683 A1 discloses a method of controlling an application instance using a graphical user interface. In response to the application instance providing a user input control for accepting a command from the user, a corresponding user input control for display in a thumbnail representation of the application instance is generated. Here, when a thumbnail representation of the application instance is displayed, the generated user input control is displayed with the thumbnail representation of the application instance, and in response to a user giving a command using the generated user input control, a corresponding command is given to the application instance.

### SUMMARY

The present application provides a terminal device desktop management method and a terminal device, to help a user manage windows of a plurality of applications, a control center, and a notification center at the same time, and shorten a movement distance operated by a user, thereby helping improve user experience. The invention is defined in the independent claims. Additional features of the invention are provided in the dependent claims. In the following, parts of the description and drawings referring to embodiments, which are not covered by the claims, are not presented as embodiments of the invention but as examples useful for understanding the invention.

According to a first aspect, the present application provides a terminal device desktop management method, including: detecting, by a terminal device, a first operation performed by a user on a first window, where the first operation is used to minimize the first window, the first window is a window of an application or a window of a notification center, and an icon of a first application corresponding to the first window is displayed in a first taskbar; minimizing, by the terminal device, the first window into the icon of the first application in response to the first operation; detecting, by the terminal device, a second operation performed by the user on the first taskbar, where the second operation is used to expand the first taskbar; and expanding, by the terminal device, the first taskbar in response to the second operation, to obtain a second taskbar, where the second taskbar includes a thumbnail of the first window.

It should be understood that, in a possible implementation, the terminal device has a touchscreen, and the first operation may be a gesture of operating the touchscreen, such as dragging, sliding, or double-tapping. In another possible implementation, a desktop of the terminal device may be operated by using a touchpad, and the first operation may be a gesture of operating the touchpad. In still another possible implementation, the desktop of the terminal device may be operated by using a mouse, and the first operation may be an action of operating the mouse.

The first taskbar may display an icon of an opened application, a function button of an application list, a function button of the notification center, a function button of a control center, and the like. It should be understood that a position of the first taskbar may be at a rightmost side or a leftmost side of the desktop, or may be at the bottom of the desktop, which is not limited in the present application.

Optionally, the first taskbar may further include an icon of an application fixed by the user to be displayed in the first taskbar.

To achieve a same effect in different scenarios, the first operation may differ. For example, the first operation is a gesture on the touchscreen, and in order to scale down a window of Mail into an icon of Mail, the first operation may be: sliding three fingers from left to right in the window of Mail; or the first operation is a gesture on the touchpad, and in order to scale down the window of Mail into the icon of Mail, the first operation may be: sliding three fingers from right to left on the touchpad; or the first operation is an action of operating a mouse, and in order to scale down the window of Mail into the icon of Mail, the first operation may be: operating the mouse to control a pointer on the desktop to slide from right to left.

The first taskbar may be understood as a compact taskbar, and the second taskbar may be understood as an expanded taskbar, that is, the second taskbar may include content of the first taskbar to implement a function of the first taskbar.

It should be understood that a region occupied by the second taskbar on the desktop may be preset by the terminal device.

The second operation may be an operation of switching from displaying the first taskbar to displaying the second taskbar on the desktop, that is, an operation of switching from displaying a compact taskbar to displaying an expanded taskbar.

The second taskbar may also be referred to as a "desktop center", and it should be understood that a name of the second taskbar is not limited in the present application. A region except the second taskbar on the desktop may be referred to as an "application interface", and the application interface may include the foregoing first window.

The "desktop center" may include an upper part of the "desktop center", a middle part of the "desktop center", and a lower part of the "desktop center". The upper part of the "desktop center" may also be referred to as a first region, and the middle part of the "desktop center" may also be referred to as a second region. The upper part (namely, the foregoing first region) of the "desktop center" may include the function button of the control center and a window thumbnail of the notification center. The upper part of the "desktop center" may also be referred to as a "notification center", and when including a lot of content, "notification center" may be further expanded.

The middle part (namely, the second region) of the "desktop center" may include a window thumbnail of an application, and a size of the window thumbnail of the application may be preset. For example, a window thumbnail of each application may be preset to a thumbnail of a same size, or window thumbnails of applications may be thumbnails of different sizes depending on content characteristics of the applications. The content characteristic of the application may be determined based on a type of the application. For example, sizes of thumbnails of chat software may be the same, sizes of thumbnails of office software may be the same, and sizes of thumbnails of browser software may be the same. Window thumbnails of the applications may be arranged, in terms of positions, from right to left, from top to bottom, from left to right, or from top to bottom.

The lower part of the "desktop center" may include the function button of the application list and a function button for changing an input method.

The middle part of the "desktop center" may also be referred to as a "multitasking background", and the user can open, close, and organize window thumbnails of the applications in the "multitasking background".

In the terminal device desktop management method provided in the present application, when the first operation performed by the user is detected, the window of the application and the window of the notification center are minimized into the icon corresponding to the first application; when the second operation performed by the user is detected, the second taskbar is displayed, to provide the user with the window thumbnail of the application, the window thumbnail of the notification center, the function button of the application list, and the function button of the control center. Therefore, the user can operate the window of the application, the application list, the notification center, and the control center in a region of the second taskbar, to help shorten a movement distance operated by the user, thereby improving user experience.

With reference to the first aspect, in some implementations of the first aspect, before the detecting, by a terminal device, a first operation performed by a user on a first window, the method further includes: detecting, by the terminal device, a third operation performed by the user on the first window, where the third operation is used to obtain function buttons of maximize, minimize, and close; and displaying, by the terminal device, the function buttons of maximize, minimize, and close in a region of the first window in response to the third operation.

When the terminal device detects an operation of tapping the function button of minimize by the user, the first window is minimized into the icon corresponding to the first window in the first taskbar. When the terminal device detects that the user taps the icon corresponding to the first window, the first window is displayed on the desktop.

When the terminal device detects that the user taps the function button of maximize, the region of the first window occupies the entire desktop except the first taskbar or the second taskbar.

When the terminal device detects that the user taps the closed function button, the first window disappears, and running of the application corresponding to the first window is ended.

When the terminal device detects again that the user taps a desktop icon of the application corresponding to the first window, the application corresponding to the first window starts to run, and the first window may be displayed on the desktop.

In the terminal device desktop management method provided in the present application, when the third operation performed by the user is detected, the function buttons of minimize, maximize, and close may be quickly displayed in a middle region of the window of the application, without requiring the user to control a pointer to move to an upper-right corner of the window, to help shorten a movement distance operated by the user, thereby improving user experience.

With reference to the first aspect, in some implementations of the first aspect, the first taskbar further includes a function button of a control center, the second taskbar includes a first region and a second region, a window thumbnail of the notification center and the function button of the control center are displayed in the first region, and a window thumbnail of the application is displayed in the second region.

With reference to the first aspect, in some implementations of the first aspect, the first window is the window of the notification center, and the thumbnail of the first window is displayed in the first region; or the first window is the window of the application, and the thumbnail of the first window is displayed in the second region.

With reference to the first aspect, in some implementations of the first aspect, the method further includes: detecting, by the terminal device, a fourth operation performed by the user on the second region, where the fourth operation is used to move a display position of the window thumbnail of the application in the second region; and moving, by the terminal device, the display position of the window thumbnail of the application in the second region in response to the fourth operation.

In the terminal device desktop management method provided in the present application, when there are a relatively large quantity of window thumbnails of applications in the "multitasking background", after detection of the fourth operation performed by the user, window thumbnails of other applications can be displayed in the "multitasking background", so that more window thumbnails can be provided for the user, thereby improving user experience.

With reference to the first aspect, in some implementations of the first aspect, the method further includes: detecting, by the terminal device, a fifth operation performed by the user on the second region, where the fifth operation is used to zoom in or out the window thumbnail of the application in the second region; and zooming in or out, by the terminal device, the window thumbnail of the application in the second region in response to the fifth operation.

In the terminal device desktop management method provided in the present application, when the fifth operation performed by the user is detected, the window thumbnails of the applications in the "multitasking background" can be zoomed in or out, so that a plurality of operation methods can be provided for the user to flexibly adjust sizes of the window thumbnails of the applications in the "multitasking background", thereby improving user experience.

With reference to the first aspect, in some implementations of the first aspect, the second region further includes a thumbnail of a second window, and the second window corresponds to a second application; and the method further includes: detecting, by the terminal device, a sixth operation performed by the user on the thumbnail of the first window, where the sixth operation is used to make the thumbnail of the first window and the thumbnail of the second window form a window group; making, by the terminal device, the thumbnail of the first window and the thumbnail of the second window form the window group in response to the sixth operation; detecting, by the terminal device, an operation of zooming in, zooming out, or moving the window group by the user; and zooming in, zooming out, or moving, by the terminal device, the window group in response to the operation of zooming in, zooming out, or moving the window group by the user.

In the terminal device desktop management method provided in the present application, when the sixth operation performed by the user is detected, window thumbnails of different applications can be made form a window group, and a plurality of window thumbnails in the window group can be managed at the same time by managing the window group, so that the user can less frequently manage a plurality of window thumbnails by using same operations, thereby improving user experience.

With reference to the first aspect, in some implementations of the first aspect, the method includes: detecting, by the terminal device, an operation of changing a size of the thumbnail of the first window by the user; and adjusting, by the terminal device, the size of the thumbnail of the first window in response to the operation of changing the size of the thumbnail of the first window by the user, and adaptively adjusting a size of the thumbnail of the second window, to obtain an adjusted window group, where the adjusted window group includes an adjusted thumbnail of the first window and an adjusted thumbnail of the second window, and a sum of a size of the adjusted thumbnail of the first window and a size of the adjusted thumbnail of the second window is equal to a size of the window group.

In the terminal device desktop management method provided in the present application, area sizes of a plurality of windows in a window group can be flexibly adjusted, thereby improving user experience.

With reference to the first aspect, in some implementations of the first aspect, the first window is the window of the application; and the method further includes: detecting, by the terminal device, a seventh operation performed by the user on the thumbnail of the first window, where the seventh operation is used to create a to-do notification corresponding to the first application; and displaying, by the terminal device, the to-do notification corresponding to the first application in the first region in response to the seventh operation.

In the terminal device desktop management method provided in the present application, when the seventh operation performed by the user is detected, a to-do notification of an application opened by the user is displayed in the notification center, to help the user quickly create the to-do notification and reduce operation steps for the user, thereby improving user experience.

With reference to the first aspect, in some implementations of the first aspect, the second taskbar further includes a function button of an application list; and the method further includes: detecting, by the terminal device, an operation performed by the user on the function button of the application list; displaying, by the terminal device, the application list in response to the operation performed by the user on the function button of the application list, where the application list includes an icon of at least one application, and the at least one application includes the first application; detecting, by the terminal device, an eighth operation performed by the user on the icon of the first application, where the eighth operation is used to create a to-do notification corresponding to the first application; and displaying, by the terminal device, the to-do notification corresponding to the first application in the first region in response to the eighth operation.

In the terminal device desktop management method provided in the present application, when the eighth operation performed by the user is detected, a to-do notification of an application not opened by the user is displayed in the notification center, to help the user quickly create the to-do notification and reduce operation steps for the user, thereby improving user experience.

With reference to the first aspect, in some implementations of the first aspect, the method further includes: detecting, by the terminal device, a ninth operation performed by the user on the second taskbar, where the ninth operation is used to display an interface of an information center; and displaying, by the terminal device, the interface of the information center in response to the ninth operation.

In the terminal device desktop management method provided in the present application, when an operation of sliding downward from the uppermost performed by the user on the "notification center" is detected, more notification information and the function button of the control center are displayed in the "notification center", to help the user view more notification information, and provide the user with more shortcut buttons, thereby reducing tedious operations of searching for function buttons, and improving user experience.

According to a first aspect, the present application provides a terminal device, including: a detection module, configured to detect a first operation performed by a user on a first window, where the first operation is used to minimize the first window, the first window is a window of an application or a window of a notification center, and an icon of a first application corresponding to the first window is displayed in a first taskbar; and a processing module, configured to minimize the first window into the icon of the first application in response to the first operation. The detection module is further configured to detect a second operation performed by the user on the first taskbar, where the second operation is used to expand the first taskbar. The processing module is further configured to expand the first taskbar in response to the second operation, to obtain a second taskbar, where the second taskbar includes a thumbnail of the first window.

With reference to the second aspect, in some implementations of the second aspect, the detection module is further configured to: detect a third operation performed by the user on the first window, where the third operation is used to obtain function buttons of maximize, minimize, and close. The processing module is further configured to: display the function buttons of maximize, minimize, and close in a region of the first window in response to the third operation.

With reference to the second aspect, in some implementations of the second aspect, the first taskbar further includes a function button of a control center, the second taskbar includes a first region and a second region, a window thumbnail of the notification center and the function button of the control center are displayed in the first region, and a window thumbnail of the application is displayed in the second region.

With reference to the second aspect, in some implementations of the second aspect, the first window is the window of the notification center, and the thumbnail of the first window is displayed in the first region; or the first window is the window of the application, and the thumbnail of the first window is displayed in the second region.

With reference to the second aspect, in some implementations of the second aspect, the detection module is further configured to: detect a fourth operation performed by the user on the second region, where the fourth operation is used to move a display position of the window thumbnail of the application in the second region. The processing module is further configured to: move the display position of the window thumbnail of the application in the second region in response to the fourth operation.

With reference to the second aspect, in some implementations of the second aspect, the detection module is further configured to: detect a fifth operation performed by the user on the second region, where the fifth operation is used to zoom in or out the window thumbnail of the application in the second region. The processing module is further configured to: zoom in or out the window thumbnail of the application in the second region in response to the fifth operation.

With reference to the second aspect, in some implementations of the second aspect, the second region further includes a thumbnail of a second window, and the second window corresponds to a second application. The detection module is further configured to: detect a sixth operation performed by the user on the thumbnail of the first window, where the sixth operation is used to make the thumbnail of the first window and the thumbnail of the second window form a window group. The processing module is further configured to: make the thumbnail of the first window and the thumbnail of the second window form the window group in response to the sixth operation. The detection module is further configured to: detect an operation of zooming in, zooming out, or moving the window group by the user. The processing module is further configured to: zoom in, zoom out, or move the window group in response to the operation of zooming in, zooming out, or moving the window group by the user.

With reference to the second aspect, in some implementations of the second aspect, the detection module is further configured to: detect an operation of changing a size of the thumbnail of the first window by the user. The processing module is further configured to: adjust the size of the thumbnail of the first window in response to the operation of changing the size of the thumbnail of the first window by the user, and adaptively adjust a size of the thumbnail of the second window, to obtain an adjusted window group, where the adjusted window group includes an adjusted thumbnail of the first window and an adjusted thumbnail of the second window, and a sum of a size of the adjusted thumbnail of the first window and a size of the adjusted thumbnail of the second window is equal to a size of the window group.

With reference to the second aspect, in some implementations of the second aspect, the first window is the window of the application. The detection module is further configured to: detect a seventh operation performed by the user on the thumbnail of the first window, where the seventh operation is used to create a to-do notification corresponding to the first application. The processing module is further configured to: display the to-do notification corresponding to the first application in the first region in response to the seventh operation.

With reference to the second aspect, in some implementations of the second aspect, the second taskbar further includes a function button of an application list. The detection module is further configured to: detect an operation performed by the user on the function button of the application list. The processing module is further configured to: display the application list in response to the operation performed by the user on the function button of the application list, where the application list includes an icon of at least one application, and the at least one application includes the first application. The detection module is further configured to: detect an eighth operation performed by the user on the icon of the first application, where the eighth operation is used to create a to-do notification corresponding to the first application. The processing module is further configured to: display the to-do notification corresponding to the first application in the first region in response to the eighth operation.

With reference to the second aspect, in some implementations of the second aspect, the detection module is further configured to: detect a ninth operation performed by the user on the second taskbar, where the ninth operation is used to display an interface of an information center. The processing module is further configured to: display the interface of the information center in response to the ninth operation.

According to a third aspect, the present application provides a terminal device, including a processor. The processor is coupled to a memory, and is configured to execute instructions in the memory, to implement the method according to any possible implementation of the foregoing first aspect. Optionally, the terminal device further includes a memory. Optionally, the terminal device further includes a communications interface, and the processor is coupled to the communications interface.

According to a fourth aspect, the present application provides a processor, including: an input circuit, an output circuit, and a processing circuit. The processing circuit is configured to receive a signal through the input circuit and transmit a signal through the output circuit, so that the processor is enabled to perform the method according to any possible implementation of the foregoing first aspect.

During a specific implementation process, the processor may be a chip, the input circuit may be an input pin, the output circuit may be an output pin, and the processing circuit may be a transistor, a gate circuit, a flip-flop, various logic circuits, and the like. The input signal received by the input circuit may be received and input by, for example, but not limited to, a receiver. The signal output by the output circuit may be output to and transmitted by, for example, but not limited to, a transmitter. The input circuit and output circuit may be a same circuit that serves as an input circuit and an output circuit respectively at different moments. Specific implementations of the processor and the various circuits are not limited in the present application.

According to a fifth aspect, the present application provides a processing apparatus, including a processor and a memory. The processor is configured to read instructions stored in the memory, and may receive a signal through a receiver, and transmit a signal through a transmitter, so as to perform the method according to any possible implementation of the foregoing first aspect.

Optionally, there is one or more processors, and there is one or more memories.

Optionally, the memory may be integrated in the processor, or the memory and the processor are separately disposed.

During a specific implementation process, the memory may be a non-transitory (non-transitory) memory, such as a read only memory (read only memory, ROM). The memory and the processor may be integrated on a same chip, or may be separately disposed in different chips. A type of the memory and arrangement manners of the memory and the processor are not limited in the present application.

It should be understood that a related data exchange process, such as sending indication information, may be a process of outputting indication information from the processor, and receiving capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus in the fifth aspect may be a chip, and the processor may be implemented by hardware or software. When implemented by hardware, the processor may be a logic circuit, an integrated circuit, or the like; when implemented by software, the processor may be a general purpose processor, and is implemented by reading software code stored in a memory. The memory may be integrated in the processor or located outside the processor and exist separately.

According to a sixth aspect, the present application provides a computer-readable storage medium. The computer-readable storage medium stores a computer program (which may also be referred to as code or instructions), and when the computer program is run on a computer, the computer is enabled to perform the method according to any possible implementation of the first aspect.

According to a seventh aspect, the present application provides a computer program product. The computer program product includes a computer program (which may also be referred to as code or instructions), and when the computer program is run, a computer is enabled to perform the method according to any possible implementation of the first aspect.

### BRIEF DESCRIPTION OF DRAWINGS

FIG. 1 is a schematic diagram of a structure of a terminal device according to an embodiment of the present application;
FIG. 2 is a schematic diagram of desktop display of a tablet computer;
FIG. 3 is a schematic flowchart of a desktop management method according to an embodiment of the present application;
FIG. 4 is a schematic diagram of desktop display of a tablet computer according to an embodiment of the present application;
FIG. 5 is a schematic diagram of desktop display of another tablet computer according to an embodiment of the present application;
FIG. 6 is a schematic diagram of desktop display of still another tablet computer according to an embodiment of the present application;
FIG. 7 is a schematic diagram of desktop display of another tablet computer according to an embodiment of the present application;
FIG. 8 is a schematic diagram of desktop display of still another tablet computer according to an embodiment of the present application;
FIG. 9 is a schematic diagram of desktop display of another tablet computer according to an embodiment of the present application;
FIG. 10 is a schematic diagram of desktop display of still another tablet computer according to an embodiment of the present application;
FIG. 11 is a schematic diagram of desktop display of another tablet computer according to an embodiment of the present application;
FIG. 12 is a schematic diagram of desktop display of still another tablet computer according to an embodiment of the present application;
FIG. 13 is a schematic diagram of desktop display of another tablet computer according to an embodiment of the present application;
FIG. 14 is a schematic diagram of desktop display of still another tablet computer according to an embodiment of the present application;
FIG. 15 is a schematic diagram of desktop display of another tablet computer according to an embodiment of the present application;
FIG. 16 is a schematic diagram of desktop display of still another tablet computer according to an embodiment of the present application;
FIG. 17 is a schematic diagram of desktop display of another tablet computer according to an embodiment of the present application;
FIG. 18 is a schematic diagram of desktop display of still another tablet computer according to an embodiment of the present application;
FIG. 19 is a schematic diagram of desktop display of another tablet computer according to an embodiment of the present application;
FIG. 20 is a schematic diagram of desktop display of still another tablet computer according to an embodiment of the present application;
FIG. 21 is a schematic block diagram of a terminal device according to an embodiment of the present application; and
FIG. 22 is a schematic block diagram of another terminal device according to an embodiment of the present application.

### DESCRIPTION OF EMBODIMENTS

The following describes the technical solutions in the present application with reference to the accompanying drawings.

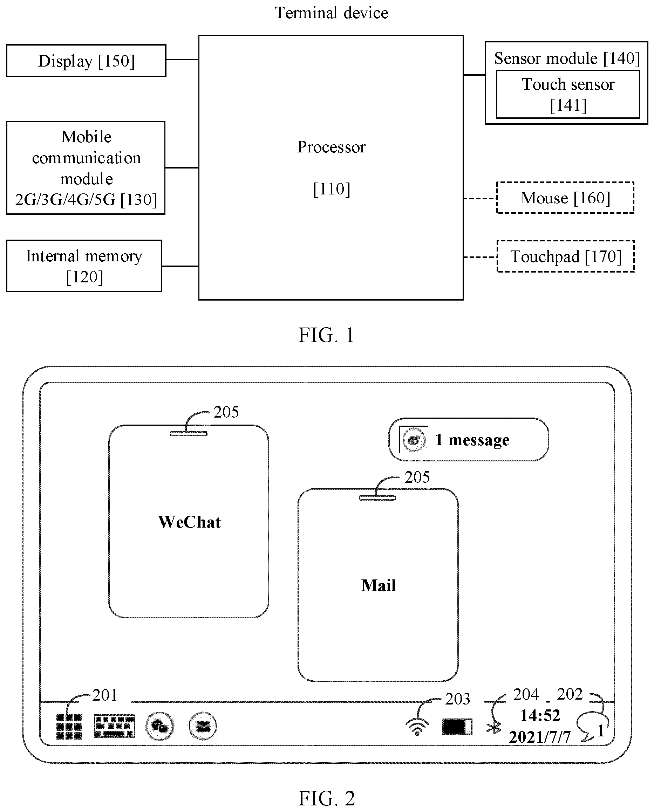

To help better understand embodiments of the present application, the following describes a structure of a terminal device in the embodiments of the present application. For example, FIG. 1 is a schematic diagram of a structure of a terminal device according to an embodiment of the present application.

The terminal device may include a processor 110, an internal memory 120, a mobile communication module 2G/3G/4G/5G 130, a sensor module 140, a display 150, and the like. The sensor module 140 may include a touch sensor 141.

Optionally, the sensor module 140 may further include a pressure sensor, a gyro sensor, a barometric pressure sensor, a magnetic sensor, an acceleration sensor, a distance sensor, a proximity light sensor, a fingerprint sensor, a temperature sensor, an ambient optical sensor, a bone conduction sensor, and the like.

Optionally, the terminal device may further include at least one of a mouse 160 or a touchpad 170, so that the user can use the mouse 160 or the touchpad 170 to control a pointer on a desktop to operate the desktop.

It may be understood that a structure shown in this embodiment of the present application does not constitute a specific limitation on the terminal device. In some other embodiments of the present application, the terminal device may include more or fewer components than those shown in the figure, or some components may be combined, or some components may be split, or a different component arrangement may be used. The components shown in the figure may be implemented in hardware, software, or a combination of software and hardware.

The processor 110 may include one or more processing units. Different processing units may be separate devices, or may be integrated in one or more processors. A memory may be further disposed in the processor 110, and is configured to store instructions and data.

The internal memory 120 may be configured to store computer-executable program code. The executable program code includes instructions. The internal memory 120 may include a program storage area and a data storage area.

The mobile communication module 2G/3G/4G/5G 130 may provide a solution, applied to the terminal device, to wireless communication including 2G, 3G, 4G, 5G, and the like. The mobile communication module 130 may include at least one filter, a switch, a power amplifier, a low noise amplifier (low noise amplifier, LNA), and the like.

The terminal device 100 implements a display function by using a graphics processing unit (graphics processing unit, GPU), the display 150, an application processor, and the like. The GPU is a microprocessor for image processing, and is connected to the display 150 and the application processor. The GPU is configured to perform mathematical and geometric calculation, and render an image.

The display 150 is configured to display an image, a video, and the like. The display 150 includes a display panel. In some embodiments, the terminal device may include one or N displays 150, where N is a positive integer greater than 1.

The touch sensor 141 may be disposed on the display 150, and the touch sensor 141 and the display 150 form a touchscreen, which is also referred to as a "touch screen".

A software system of the terminal device may use a layered architecture, an event-driven architecture, a microkernel architecture, a micro service architecture, a cloud architecture, or the like. Details are not described herein.

The terminal device provided in this embodiment of the present application may also be referred to as a terminal (terminal), a tablet computer (pad), a desktop computer, a notebook computer, or the like. A specific technology and a specific device form used by the terminal device are not limited in this embodiment of the present application.

Currently, when using a computer, a user may use a touchpad or a mouse to control a pointer on a desktop to operate the desktop. If a screen of the computer is a touchscreen, the user may also operate the desktop by tapping on the touchscreen. The following describes in detail embodiments of the present application by using a tablet computer as an example.

FIG. 2 is a schematic diagram of desktop display of a tablet computer. It should be understood that the tablet computer has a touchscreen, and a user can operate a desktop through gestures. As shown in FIG. 2, after the user taps a desktop icon of an application, a strip-shaped taskbar below the desktop may display an icon of an application opened by the user, and a window of the opened application may be displayed on the desktop. For example, after the user taps desktop icons of WeChat and Mail, the strip-shaped taskbar below the desktop may display the icons of WeChat and Mail, and windows of WeChat and Mail may be displayed on the desktop. In the window of WeChat or Mail, the user may adjust a position of the window of the application by operating a drag bar 205.

The strip-shaped taskbar below the desktop may further display a function button of an application list, a function button of a notification center, and a function button of a control center, for example, a function button 201 of an application list, a function button 202 of a notification center, a function button 203 for network connection, and a function button 204 for setting a Bluetooth connection.

In the desktop shown in FIG. 2, when the user moves a position of a window of an application, the user needs to place a finger on a position of the drag bar 205, and move the drag bar 205 with the finger to move the window of the application. To open the application list to view applications, the user needs to place the finger on a lower-left corner of the taskbar, and tap the function button 201 of the application list with the finger to display the applications on the tablet computer. To view notification information, the user needs to place the finger on a lower-right corner of the taskbar, and tap the function button 202 of the notification center with the finger to display the notification information on the tablet computer. For example, the notification information may be a notification of a Weibo application, and the notification information may be displayed on the desktop; to connect the tablet computer to a network, the user needs to place the finger on the function button 203 for network connection, and tap the function button 203 for network connection with the finger to display an interface for network connection on the tablet computer.

In the desktop shown in FIG. 2, regions in which the window of the application, the function button of the application list, the function button of the notification center, and the function button of the control center are located are relatively far away from each other and have a large range. To operate the window of the application, the function button of the application list, the function button of the notification center, and the function button of the control center, the user needs to perform back-and-forth operations on the regions in which the window of the application, the function button of the application list, the function button of the notification center, and the function button of the control center are located. Therefore, the user needs to move the finger back and forth by a relatively large distance.

In summary, when the user uses the tablet computer and manages windows of a plurality of applications, the control center, and the notification center at the same time, there is a problem of a relatively long movement distance, which is inconducive to user experience.

In view of this, embodiments of the present application provide a terminal device desktop management method and a terminal device. A taskbar may display a window of an application, an information window of a notification center, and a function button of a control center. The user can operate the window of the application, an application list, the notification center, and the control center in a region of the taskbar, to help shorten a movement distance operated by a user, thereby improving user experience.

In order to clearly describe the technical solutions in the embodiments of the present application, in the embodiments of the present application, words such as "first" and "second" are used to distinguish between same or similar items that have basically a same function and effect. For example, a first instruction and a second Instruction are intended to distinguish between different user instructions and do not limit an order thereof. A person skilled in the art may understand that words such as "first" and "second" do not limit a quantity and an execution order, and the words "first" and "second" are not necessarily different.

It should be noted that, in the present application, the word "example" or "for example" is used to represent giving an example, an illustration, or a description. Any embodiment or design scheme described as "example" or "for example" in the present application should not be construed as being preferred or having more advantages than another embodiment or design scheme. To be specific, use of the word "example" or "for example" or the like is intended to present a related concept in a specific manner.

Moreover, "at least one" means one or more, and "a plurality of" means two or more. In the present application, "and/or" is an association relationship describing associated objects, and indicates that three relationships may exist. For example, A and/or B may indicate that only A exists, both A and B exist, and only B exists. A and B each may be singular or plural. The character "/" generally indicates an "or" relationship between the associated objects. "At least one of the following items" or a similar expression means any combination of these items, including any combination of a single item or a plurality of items. For example, at least one of a, b, or c may represent a or b or c; a and b; a and c; b and c; or a, b, and c, where a, b, and c each may be singular or plural.

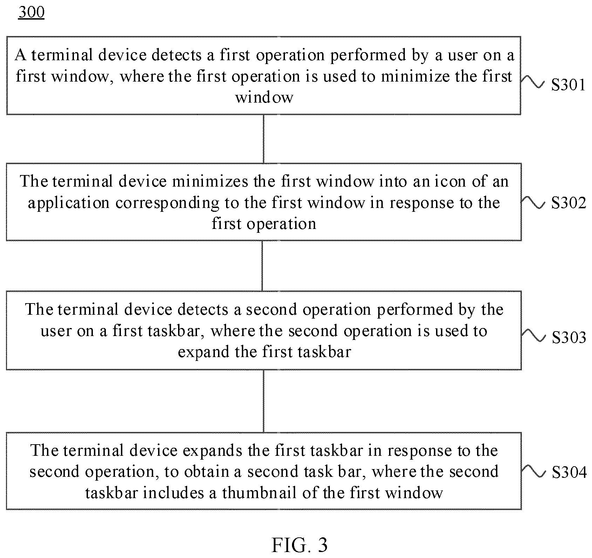

FIG. 3 is a terminal device desktop management method 300 according to an embodiment of the present application. The method may be applied to the terminal device shown in FIG. 1 and the tablet computer shown in FIG. 2. This is not limited in this embodiment of the present application. The method 300 may include the following steps.

S301. The terminal device detects a first operation performed by a user on a first window, where the first operation is used to minimize the first window, the first window is a window of an application or a window of a notification center, and an icon of a first application corresponding to the first window is displayed in a first taskbar.

It should be understood that, in a possible implementation, the terminal device has a touchscreen, and the first operation may be a gesture of operating the touchscreen, such as dragging, sliding, or double-tapping. In another possible implementation, a desktop of the terminal device may be operated by using a touchpad, and the first operation may be a gesture of operating the touchpad. In still another possible implementation, the desktop of the terminal device may be operated by using a mouse, and the first operation may be an action of operating the mouse.

The window of the application may be a window of an application opened by the user, for example, the window of the application may be the window of WeChat or Mail shown in FIG. 2. The window of the notification center may be a window of notification information, for example, the window of the notification center may be a window of notification information of Weibo shown in FIG. 2.

The first taskbar may display an icon of an opened application, a function button of an application list, a function button of the notification center, a function button of a control center, and the like. It should be understood that a position of the first taskbar may be at a rightmost side or a leftmost side of the desktop, or may be at the bottom of the desktop, which is not limited in this embodiment of the present application.

Optionally, the first taskbar may further include an icon of an application fixed by the user to be displayed in the first taskbar.

S302. The terminal device minimizes the first window into the icon of the first application corresponding to the first window in response to the first operation.

The first window is the window of the application, and the icon corresponding to the first window may be an icon of the application (namely, the icon of the first application). The first window is the window of the notification center, and the icon corresponding to the first window may be an icon corresponding to the function button of the notification center (namely, the icon of the first application). For example, the icon corresponding to the first window may be an icon of the function button 202 of the notification center shown in FIG. 2.

For example, the terminal device detects the first operation performed by the user on a window (namely, the first window) of the first application, and the terminal device minimizes the window of the first application into an icon corresponding to the window of the application in response to the first operation.

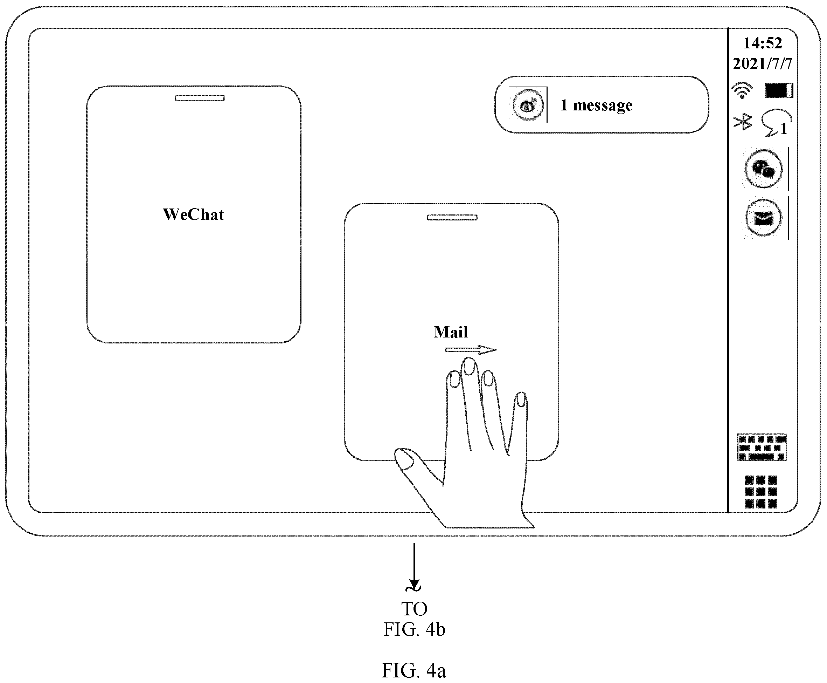

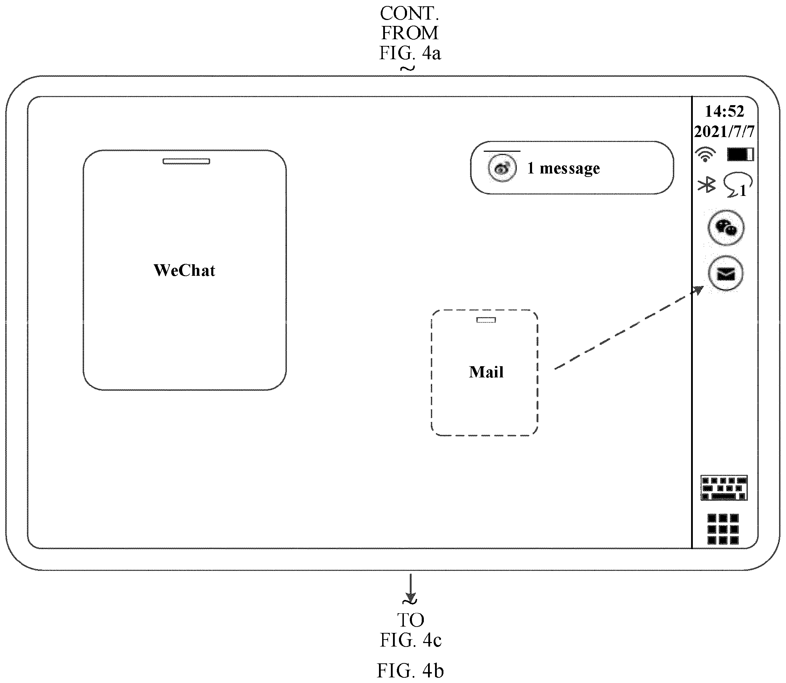

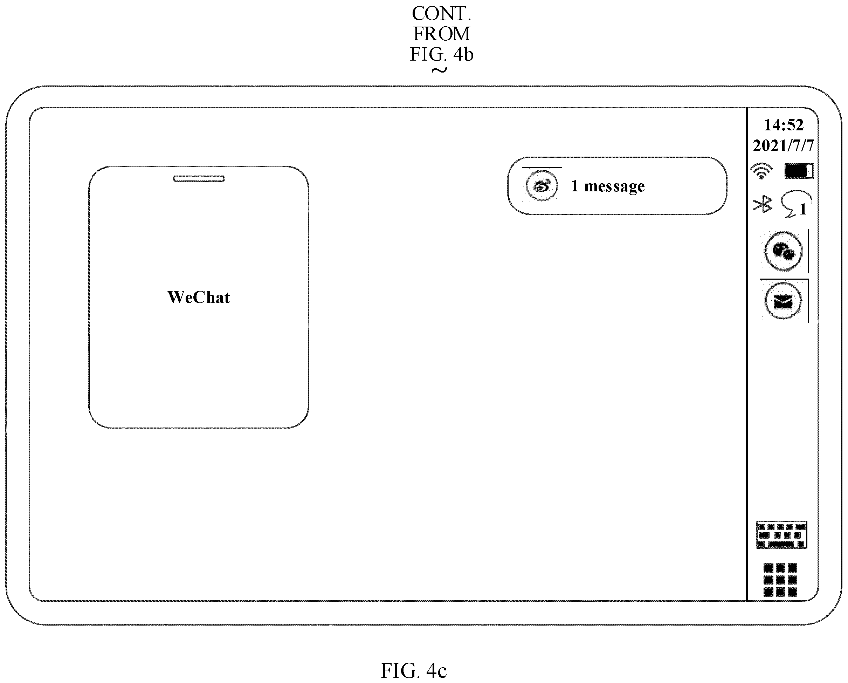

FIG. 4 is a schematic diagram of desktop display of a tablet computer. It should be understood that the tablet computer has a touchscreen, and a user can operate a desktop through gestures. In the interface in FIG. 4a, the first taskbar is at the rightmost side of the desktop, and includes icons of opened applications (WeChat and Mail), the function button of the application list, a function button for changing an input method, the function button of the notification center, and the function button of the control center. The user may slide three fingers from left to right (namely, the first operation) in the window (namely, the first window) of Mail. As shown in the interface in FIG. 4b, when the tablet computer detects the first operation performed by the user in the window of Mail, the window of Mail is shrunk in response to the first operation. When the window of Mail is shrunk to a preset zoom-out level, the window is moved to the icon of Mail in the first taskbar. It should be understood that a zoom-out speed and a zoom-out level of the window of Mail may be preset by the tablet computer. Finally, the tablet computer displays the interface in FIG. 4c in response to the first operation performed by the user in the window of Mail.

In the interface in FIG. 4a, the window of WeChat and notification information of Weibo may be respectively shrunk into the icon of WeChat and the icon of the function button of the notification center in the first taskbar by using the first operation.

To achieve a same effect in different scenarios, the first operation may differ. For example, the first operation is a gesture on the touchscreen, and in order to scale down a window of Mail into an icon of Mail, the first operation may be: sliding three fingers from left to right in the window of Mail; or the first operation is a gesture on the touchpad, and in order to scale down the window of Mail into the icon of Mail, the first operation may be: sliding three fingers from right to left on the touchpad; or the first operation is an action of operating a mouse, and in order to scale down the window of Mail into the icon of Mail, the first operation may be: operating the mouse to control a pointer on the desktop to slide from right to left.

It should be understood that the first operation may differ depending on the position of the first taskbar on the desktop. For example, in FIG. 4, the first taskbar is on the rightmost side of the desktop, and the first operation may be: sliding three fingers from left to right. When the first taskbar is on the leftmost side of the desktop, the first operation may be: sliding three fingers from right to left. In FIG. 4, the first taskbar is at the bottom of the desktop, and the first operation may be: sliding three fingers from top to bottom.

S303. The terminal device detects a second operation performed by the user on the first taskbar, where the second operation is used to expand the first taskbar.

It should be understood that, in a possible implementation, the terminal device has a touchscreen, and the second operation may be a gesture of operating the touchscreen, such as dragging, sliding, or double-tapping. In another possible implementation, a desktop of the terminal device may be operated by using a touchpad, and the second operation may be a gesture of operating the touchpad. In still another possible implementation, the desktop of the terminal device may be operated by using a mouse, and the second operation may be an action of operating the mouse.

S304. The terminal device expands the first taskbar in response to the second operation, to obtain a second taskbar, where the second taskbar includes a thumbnail of the first window.

The first taskbar may be understood as a compact taskbar, and the second taskbar may be understood as an expanded taskbar, that is, the second taskbar may include content of the first taskbar to implement a function of the first taskbar.

It should be understood that a region occupied by the second taskbar on the desktop may be preset by the terminal device.

The second operation may be an operation of switching from displaying the first taskbar to displaying the second taskbar on the desktop, that is, an operation of switching from displaying a compact taskbar to displaying an expanded taskbar.

The second taskbar may also be referred to as a "desktop center", and it should be understood that a name of the second taskbar is not limited in this embodiment of the present application. A region except the second taskbar on the desktop may be referred to as an "application interface", and the application interface may include the foregoing first window.

The "desktop center" may include an upper part of the "desktop center", a middle part of the "desktop center", and a lower part of the "desktop center". The upper part of the "desktop center" may also be referred to as a first region, and the middle part of the "desktop center" may also be referred to as a second region. The upper part (namely, the first region) of the "desktop center" may include the function button of the control center and a window thumbnail of the notification center. The upper part of the "desktop center" may also be referred to as a "notification center", and when including a lot of content, the "notification center" may be further expanded.

The middle part (namely, the second region) of the "desktop center" may include a window thumbnail of the application, and a size of the window thumbnail of the application may be preset. For example, a window thumbnail of each application may be preset to a thumbnail of a same size, or window thumbnails of applications may be thumbnails of different sizes depending on content characteristics of the applications. The content characteristic of the application may be determined based on a type of the application. For example, sizes of thumbnails of chat software may be the same, sizes of thumbnails of office software may be the same, and sizes of thumbnails of browser software may be the same. Window thumbnails of the applications may be arranged, in terms of positions, from right to left, from top to bottom, from left to right, or from top to bottom.

The lower part of the "desktop center" may include the function button of the application list and a function button for changing an input method.

The middle part of the "desktop center" may also be referred to as a "multitasking background", and the user can open, close, and organize window thumbnails of the applications in the "multitasking background".

For example, when the terminal device detects an operation of tapping a window thumbnail of an application by the user, the window thumbnail of the application may be displayed in the "application interface"; when the terminal device detects an operation of sliding upward the window thumbnail of the application by the user, the window thumbnail of the application is closed by the user and disappears in the "multitasking background".

The window thumbnail of the application is a window interface of the application at a last moment in the "application interface". When the application has a plurality of processes in the memory, the plurality of processes are all displayed in a form of thumbnails in the "multitasking background". The plurality of processes may include a main process and other sub-processes. The window thumbnail of the application may be a window interface of the main process. When the terminal device detects that the user taps the window interface of the main process, a secondary list is displayed, and the secondary list includes interfaces of other sub-processes for the user to select. For example, a main process of WeChat is a chat interface. When the user opens a mini program in the WeChat application, an interface of the mini program is a sub-process. When the terminal device detects the first operation performed by the user on the window of WeChat, the interface of the main process of WeChat and the interface of the mini program may be combined and displayed in the "multitasking background". The interface of the main process of WeChat is the window thumbnail of WeChat. When the terminal device detects that the user taps the window thumbnail of WeChat, a secondary list is displayed, and the secondary list includes a thumbnail of the mini program for the user to select.

The first taskbar may achieve hiding of content in the "desktop center". The second taskbar may achieve display of the content in the "desktop center", and the user can view window thumbnails of the application and the notification center, and can further view specific window content.

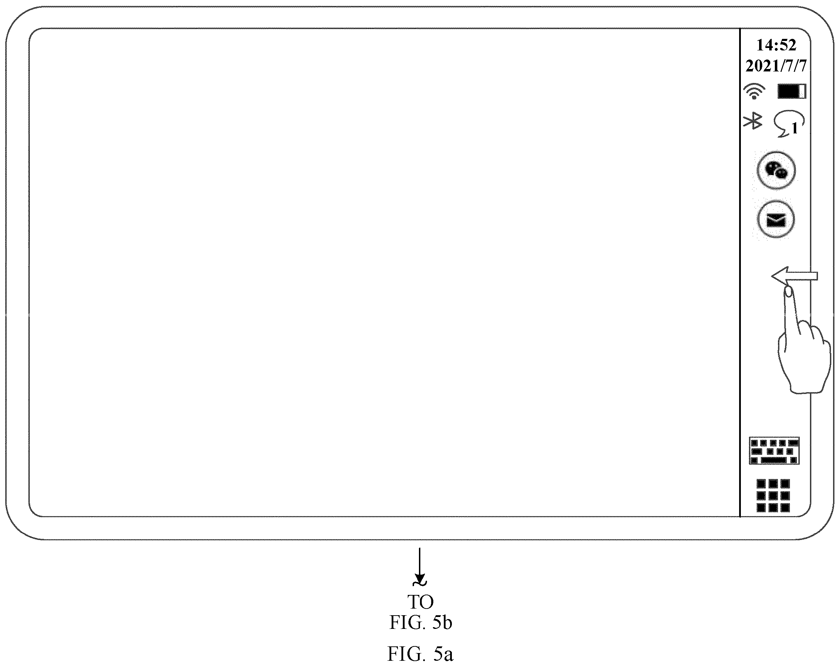

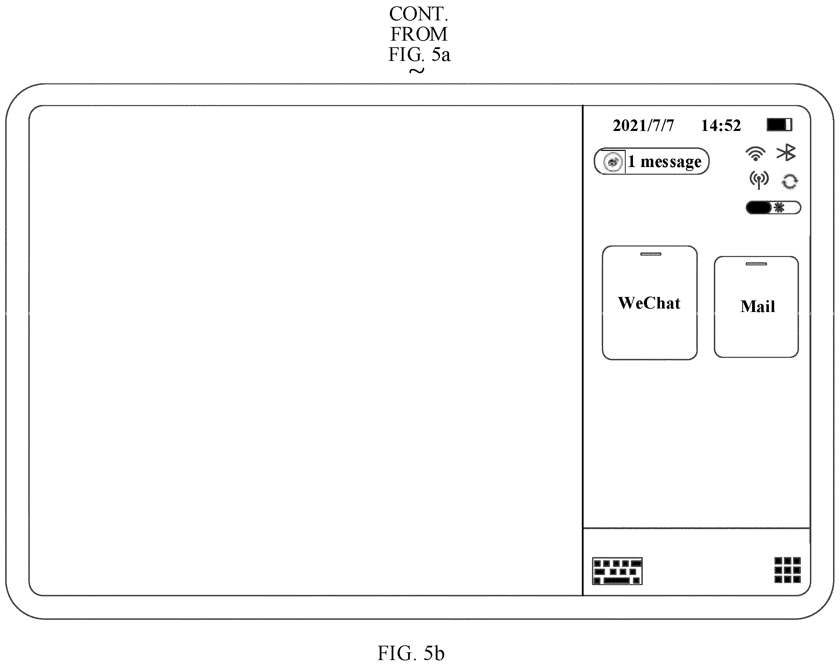

For example, FIG. 5 is a schematic diagram of desktop display of a tablet computer. It should be understood that the tablet computer has a touchscreen, and a user can operate a desktop through gestures. In the interface in FIG. 5a, the window of WeChat, the window of Mail, and the window of the notification center are all shrunk into the first taskbar by using the first operation. The first taskbar may be understood as a compact taskbar. The user may slide one finger from a right edge of the first taskbar to the left (namely, the foregoing second operation). As shown in the interface FIG. 5b. When the tablet computer detects the second operation performed by the user on the first taskbar, the second taskbar is displayed in response to the second operation. The second taskbar may be understood as an expanded taskbar or the "desktop center". The "notification center" in the "desktop center" includes a function button for network connection, a function button for setting a Bluetooth connection, a function button for hotspot connection, a function button for screen rotation, and a control for desktop brightness adjustment, and the like. The "multitasking background" in the "desktop center" includes the window thumbnail of WeChat and the window thumbnail of Mail. The bottom part of the "desktop center" may include the function button of the application list and a function button for changing an input method.

To achieve a same effect in different scenarios, the second operation may differ. For example, the second operation is a gesture on the touchscreen, and to implement the foregoing display of the second taskbar, the second operation may be: sliding one finger from a right edge of the first taskbar to the left. The second operation is a gesture on the touchpad, and to implement the foregoing display of the second taskbar, the second operation may be: sliding one finger rightward until a pointer is controlled to be on the right edge of the first taskbar. The second operation is an action of operating a mouse, and to implement the foregoing display of the second taskbar, the second operation may be: operating the mouse to control a pointer on the desktop to slide rightward until the pointer is controlled to be on the right edge of the first taskbar.

It should be understood that the second operation may differ depending on the position of the first taskbar on the desktop. For example, in FIG. 5, the first taskbar is on the rightmost side of the desktop, and the second operation may be: sliding one finger from the right edge of the first taskbar to the left. When the first taskbar is on the leftmost side of the desktop, the second operation may be: sliding from the right edge of the first taskbar to the right. When the first taskbar is at the bottom of the desktop, the first operation may be: sliding from the bottom edge of the first taskbar to the top.

It should be further understood that specific gestures or actions of the first operation and the second operation are merely examples, and the specific gestures or actions of the first operation and the second operation are not limited in this embodiment of the present application, provided that the functions of scaling the first into the icon corresponding to the first window in the first taskbar and displaying the second taskbar can be implemented.

The foregoing "desktop center", "application interface", "notification center", and "multitasking background" are merely example names, which are not limited in this embodiment of the present application.

In the terminal device desktop management method provided in this embodiment of the present application, when the first operation performed by the user is detected, the window of the application and the window of the notification center are minimized into the icon corresponding to the first application; when the second operation performed by the user is detected, the second taskbar is displayed, to provide the user with the window thumbnail of the application, the window thumbnail of the notification center, the function button of the application list, and the function button of the control center. Therefore, the user can operate the window of the application, the application list, the notification center, and the control center in a region of the second taskbar, to help shorten a movement distance operated by the user, thereby improving user experience.

Optionally, the terminal device detects a third operation performed by the user on the first window, where the third operation is used to obtain function buttons of maximize, minimize, and close. The terminal device displays the function buttons of maximize, minimize, and close in a region of the first window in response to the third operation.

When the terminal device detects an operation of tapping the function button of minimize by the user, the first window is minimized into the icon corresponding to the first window in the first taskbar. When the terminal device detects that the user taps the icon corresponding to the first window, the first window is displayed on the desktop.

When the terminal device detects that the user taps the function button of maximize, the region of the first window occupies the entire desktop except the first taskbar or the second taskbar.

When the terminal device detects that the user taps the closed function button, the first window disappears, and running of the application corresponding to the first window is ended.

When the terminal device detects again that the user taps a desktop icon of the application corresponding to the first window, the application corresponding to the first window starts to run, and the first window may be displayed on the desktop.

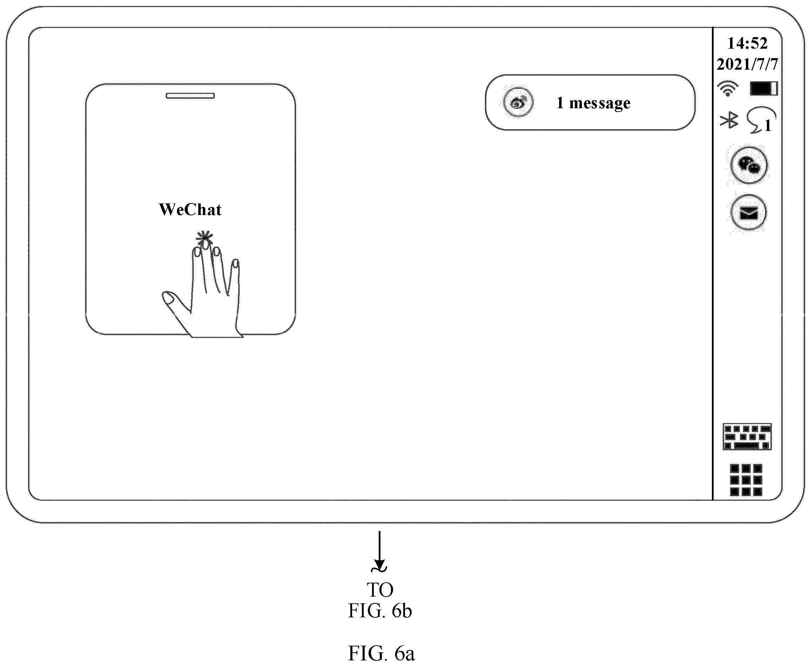

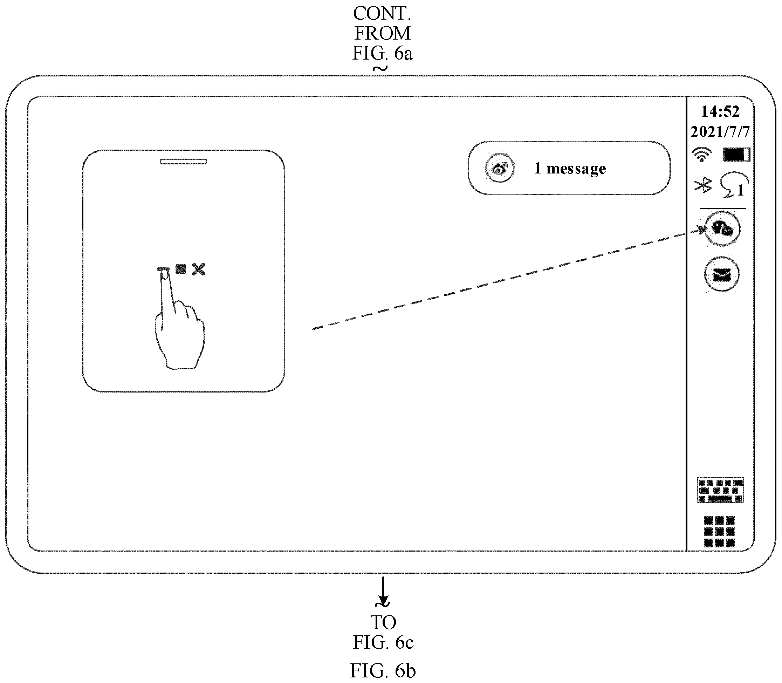

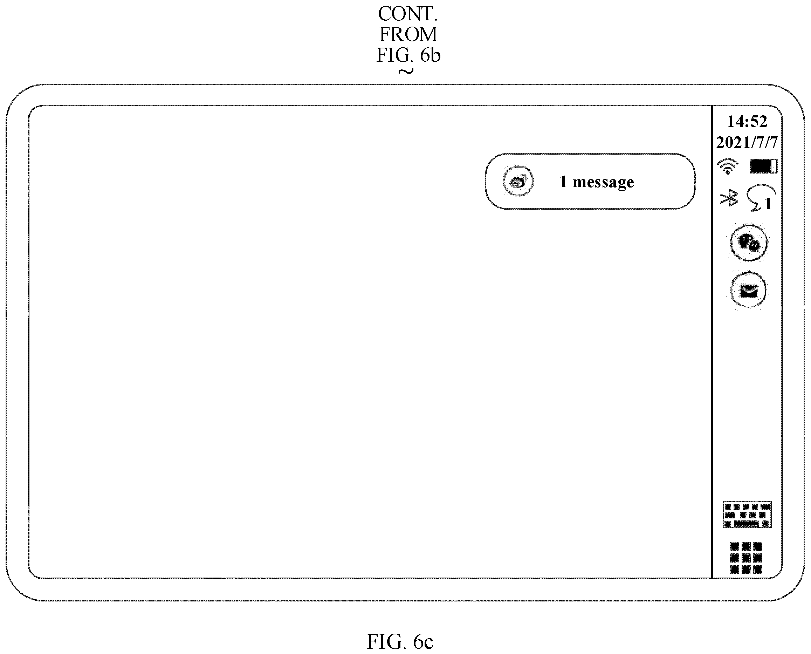

For example, FIG. 6 is a schematic diagram of desktop display of a tablet computer. It should be understood that the tablet computer has a touchscreen, and a user can operate a desktop through gestures. In the interface in FIG. 6a, the user may tap the window of WeChat with three fingers (namely, the foregoing third operation). As shown in the interface in FIG. 6b, when the tablet computer detects the third operation performed by the user, the function buttons of minimize, maximize, and close are displayed in a middle region of the window of WeChat, and at the same time, content of the window of WeChat may be blurred. When the terminal device detects that the user taps the function button of minimize, the window of WeChat is minimized into the icon of WeChat in the first taskbar, and a final desktop may be shown in the interface in FIG. 6c.

To achieve a same effect in different scenarios, the third operation may differ. For example, the third operation is a gesture on the touchscreen, and to implement the foregoing display of the function buttons of minimize, maximize, and close, the third operation may be: tapping the first window with three fingers. The first operation is a gesture on the touchpad, and to implement the foregoing display of the function buttons of minimize, maximize, and close, the third operation may be: tapping the touchpad with three fingers. The third operation is an action of operating a mouse, and to implement the foregoing display of the function buttons of minimize, maximize, and close, the third operation may be: clicking a left button of the mouse three times in the first window.

In the terminal device desktop management method provided in this embodiment of the present application, when the third operation performed by the user is detected, the function buttons of minimize, maximize, and close may be quickly displayed in a middle region of the window of the application, without requiring the user to control a pointer to move to an upper-right corner of the window, to help shorten a movement distance operated by the user, thereby improving user experience.

In an optional embodiment, the "multitasking background" in the "desktop center" may include a window thumbnail of at least one application, and when there are many window thumbnails of applications, the user may view only window thumbnails of applications displayed in a region of the "multitasking background". When the user wants to view window thumbnails of other applications, a fourth operation may be performed. After the terminal device detects the fourth operation performed by the user, window thumbnails of other applications are displayed in the region of the "multitasking background".

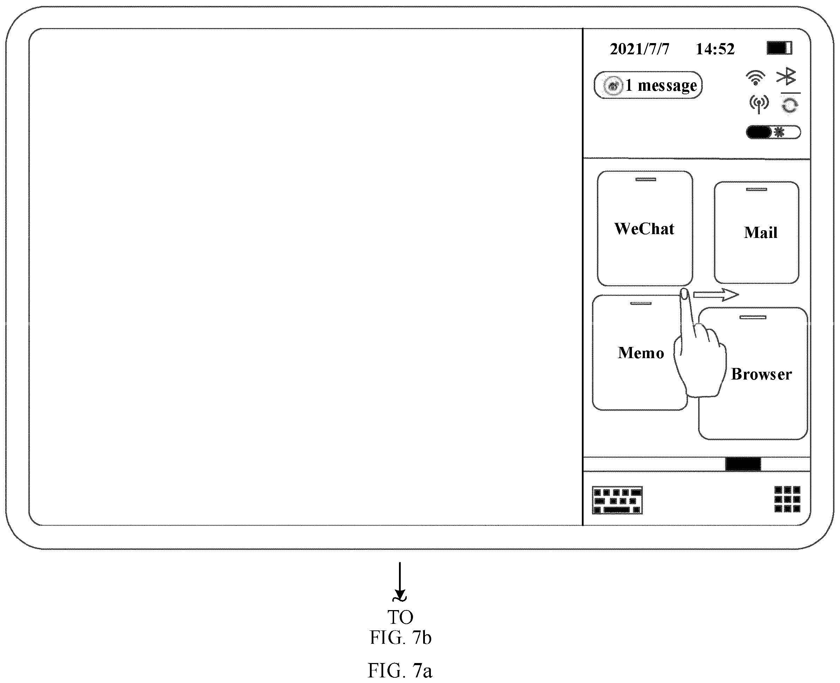

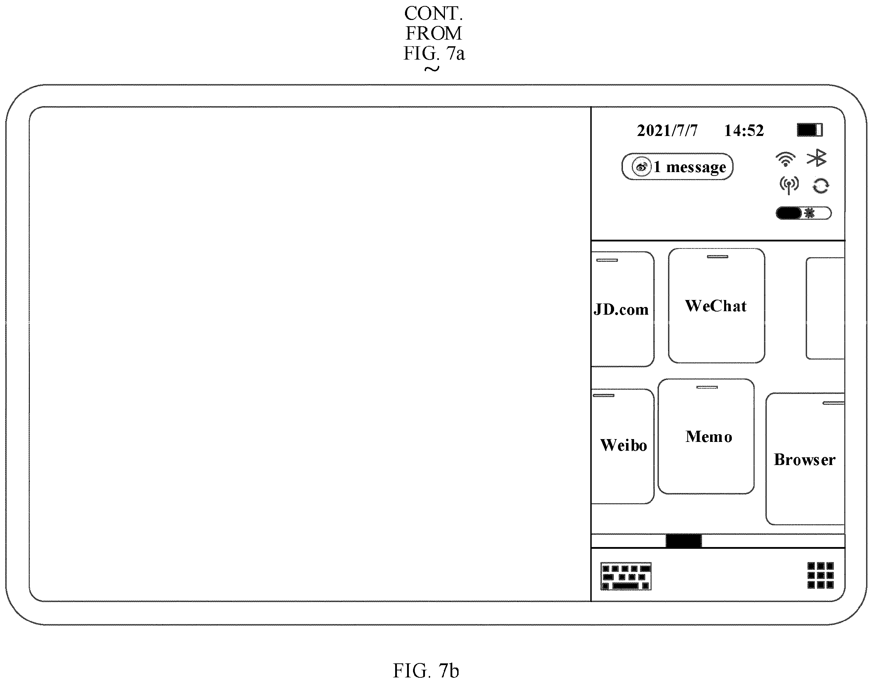

For example, FIG. 7 is a schematic diagram of desktop display of a tablet computer. It should be understood that the tablet computer has a touchscreen, and a user can operate a desktop through gestures. In the interface in FIG. 7a, the region of the "multitasking background" includes window thumbnails of WeChat, Mail, Memo and Browser, and there is a horizontal slider bar below the region of "Multitasking background", which may indicate that there are many window thumbnails applications in the "multitasking background". The user may slide one finger rightward (namely, the foregoing fourth operation) in the region of the "multitasking background", or the user may slide the horizontal slider bar rightward with one finger (namely, the foregoing fourth operation). In response to this operation, the terminal device displays window thumbnails located to the left of the window thumbnails of WeChat and Browser (namely, window thumbnails of JD.com and Weibo), as shown in the interface in FIG. 7b.

It should be understood that the user may alternatively slide one finger leftward (namely, the foregoing fourth operation) in the region of the "multitasking background", and in response to this operation, the terminal device displays window thumbnails located to the right of the window thumbnails of Mail and Browser. Alternatively, the user may slide the horizontal slider bar leftward with one finger (namely, the foregoing fourth operation), and in response to this operation, the terminal device displays window thumbnails located to the right of the window thumbnails of Mail and Browser.

It should be further understood that, when there is a vertical slider bar on the right side of the region of the "multitasking background", the user may slide one finger upward (namely, the foregoing fourth operation) in the region of the "multitasking background", and in response to this operation, the terminal device displays window thumbnails located under the window thumbnails of Memo and Browser. Alternatively, the user may slide the vertical slider bar upward with one finger (namely, the foregoing fourth operation), and in response to this operation, the terminal device displays window thumbnails located under the window thumbnails of Memo and Browser.

The user may alternatively slide one finger downward (namely, the foregoing fourth operation) in the region of the "multitasking background", and in response to this operation, the terminal device displays window thumbnails located above the window thumbnails of WeChat and Mail. Alternatively, the user may slide the vertical slider bar upward with one finger (namely, the foregoing fourth operation), and in response to this operation, the terminal device displays window thumbnails located above the window thumbnails of WeChat and Mail.

When the fourth operation is a gesture on a touchpad or an action of operating a mouse, the fourth operation may be: sliding the horizontal slider bar rightward or leftward, or may be: sliding the vertical slider bar upward or downward.

In the terminal device desktop management method provided in this embodiment of the present application, when there are a relatively large quantity of window thumbnails of applications in the "multitasking background", after detection of the fourth operation performed by the user, window thumbnails of other applications can be displayed in the "multitasking background", so that more window thumbnails can be provided for the user, thereby improving user experience.

In an optional embodiment, the terminal device may detect a fifth operation performed by the user on the region of the "multitasking background", and in response to the fifth operation, the terminal device may zoom in or out the window thumbnail of the application.

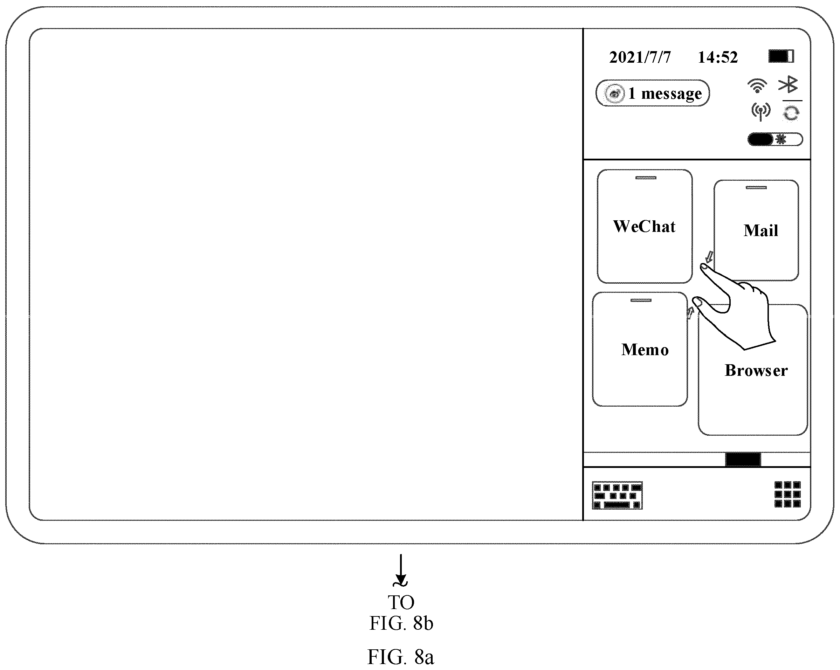

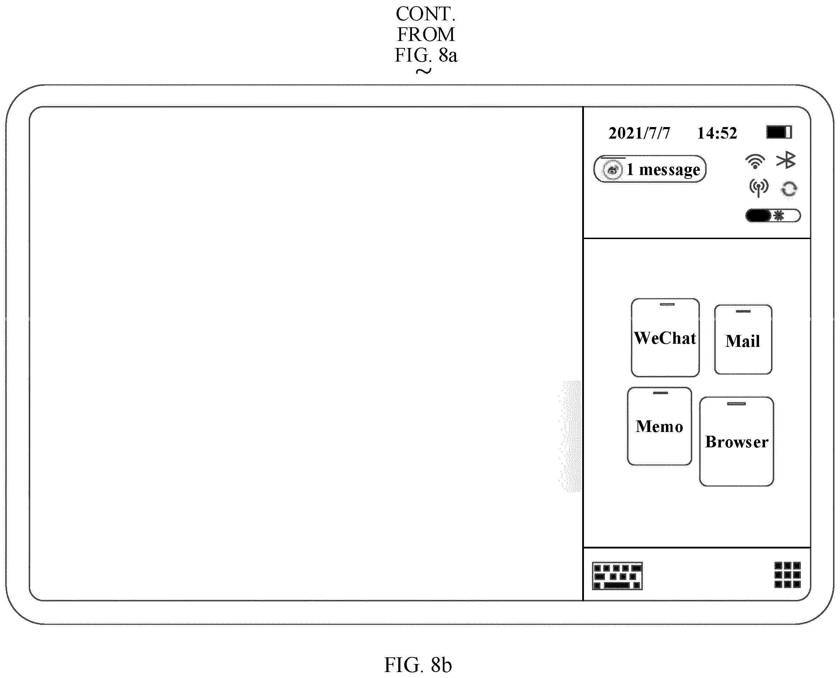

For example, FIG. 8 is a schematic diagram of desktop display of a tablet computer. It should be understood that the tablet computer has a touchscreen, and a user can operate a desktop through gestures. In the interface in FIG. 8a, the region of the "multitasking background" includes window thumbnails of WeChat, Mail, Memo and Browser, and the user may slide two fingers toward each other (namely, the foregoing fifth operation). As shown in the interface in FIG. 8b, the tablet computer zooms out the window thumbnails of WeChat, Mail, Memo, and Browser in response to the fifth operation. A zoom-out level of the window thumbnails of WeChat, Mail, Memo, and Browser may be determined by a distance by which the user slides two fingers toward each other.

It should be understood that, when the user slides two fingers away from each other (namely, the foregoing fifth operation), the tablet computer zooms in the window thumbnails of WeChat, email, Memo, and Browser in response to the fifth operation. A zoom-in level of the window thumbnails of WeChat, Mail, Memo, and Browser may be determined by a distance by which the user slides two fingers away from each other.

For example, when the fifth operation is a gesture on a touchpad, the fifth operation may be: sliding two fingers toward each other or sliding two fingers away from each other. When the fifth operation is an action of operating a mouse, the fifth operation may be: pressing and holding a left button of the mouse and scrolling a scroll wheel of the mouse. Pressing and holding the left button of the mouse and scrolling the scroll wheel of the mouse downward means zooming out the window thumbnail of the application. Pressing and holding the left button of the mouse and scrolling the scroll wheel of the mouse means zooming in the window thumbnail of the application.

In the terminal device desktop management method provided in this embodiment of the present application, when the fifth operation performed by the user is detected, the window thumbnails of the applications in the "multitasking background" can be zoomed in or out, so that a plurality of operation methods can be provided for the user to flexibly adjust sizes of the window thumbnails of the applications in the "multitasking background", thereby improving user experience.

In an optional embodiment, the region of the "multitasking background" may include the thumbnail of the first window and a thumbnail of a second window, the first window may correspond to the first application, and the second window may correspond to the second application. The terminal device detects a sixth operation performed by the user on the window thumbnail of the first application (namely, the thumbnail of the first window), and in response to the sixth operation, the terminal device may make the window thumbnail of the first application and the window thumbnail of the second application (namely, the thumbnail of the second window) form a window group.

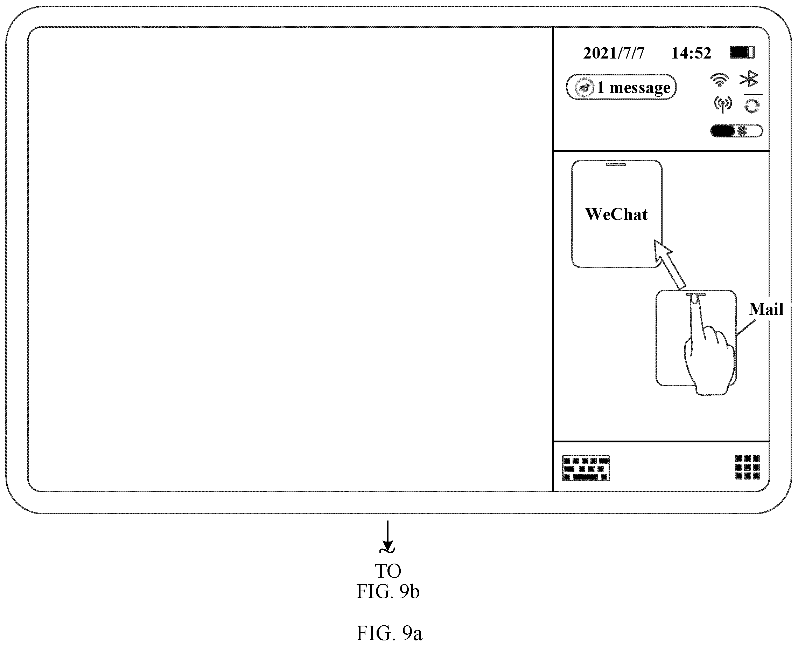

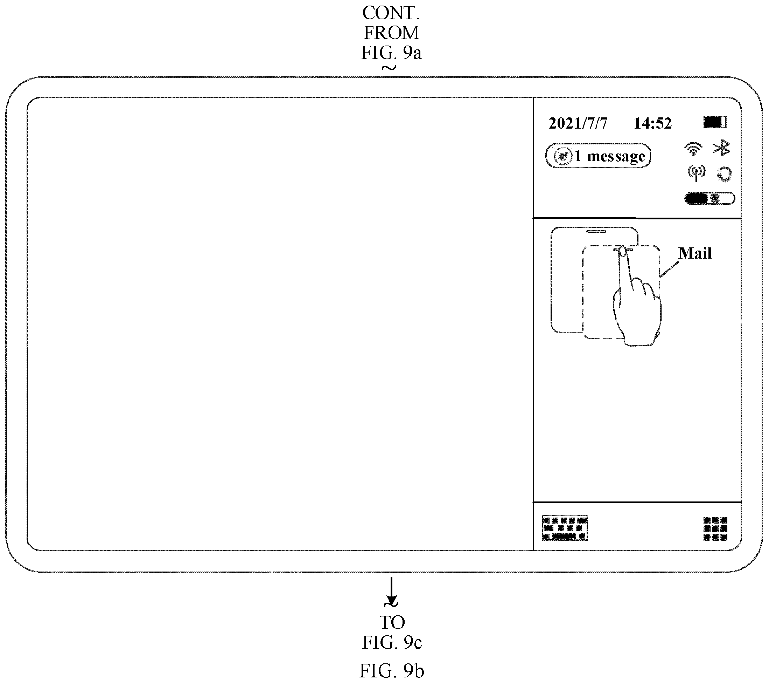

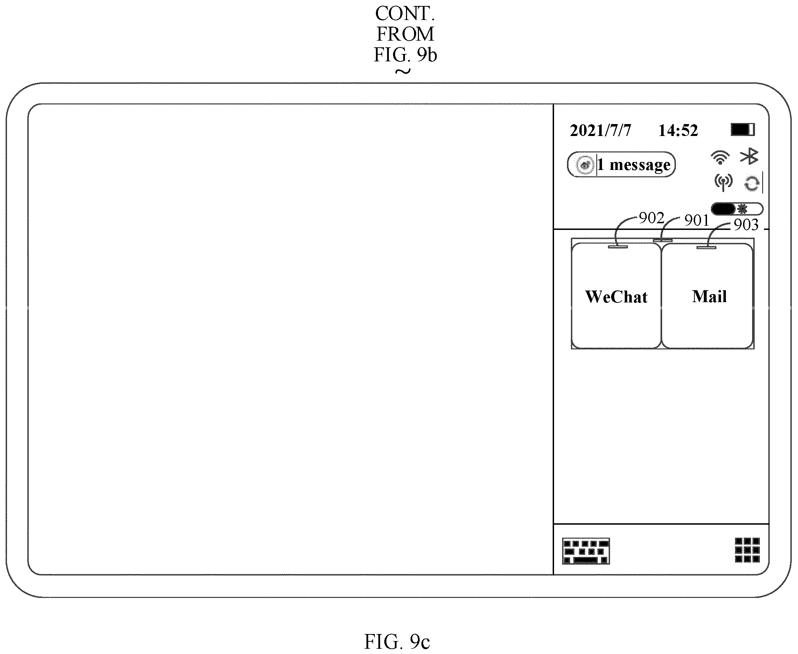

For example, FIG. 9 is a schematic diagram of desktop display of a tablet computer. It should be understood that the tablet computer has a touchscreen, and a user can operate a desktop through gestures. In the interface in FIG. 9a, the user may drag a drag bar of the window thumbnail of Mail with one finger to approach or be superimposed onto the window thumbnail of WeChat from the right side of the window thumbnail of WeChat (namely, the foregoing sixth operation). As shown in the interface in FIG. 9b, the window thumbnail of Mail is superimposed from the right side of the window thumbnail of WeChat onto the window of WeChat. After 1 second, as shown in the interface in FIG. 9c, in response to this operation, the terminal device makes the window thumbnail of WeChat (namely, the window thumbnail of the first application) and the window thumbnail of Mail (namely, the window thumbnail of the second application) form a window group. In addition, a length and a width of the window thumbnail of Mail can be adaptively adjusted to be a length and a width of the window thumbnail of WeChat. The user may move the window group by dragging a drag bar 901 of the window group. The window thumbnail of WeChat and the window thumbnail of Mail in the window group may be closed, zoomed in, zoomed out, or moved at the same time.

It should be understood that the foregoing 1 second is merely used as an example, which is not limited in this embodiment of the present application.

In the window group, the user may drag a drag bar 902 of the window thumbnail of WeChat or drag a drag bar 903 of the window thumbnail of Mail to separate the window thumbnail of WeChat from the window thumbnail of Mail.

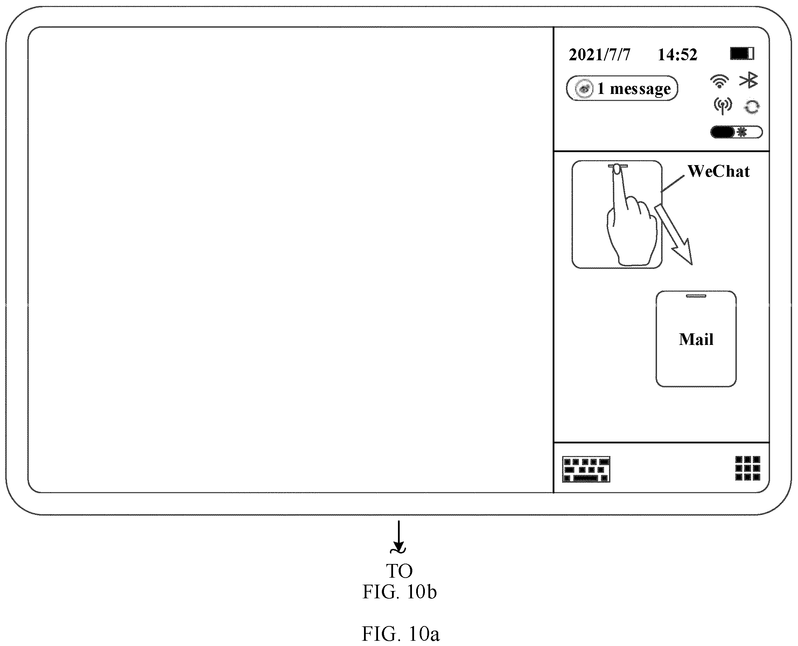

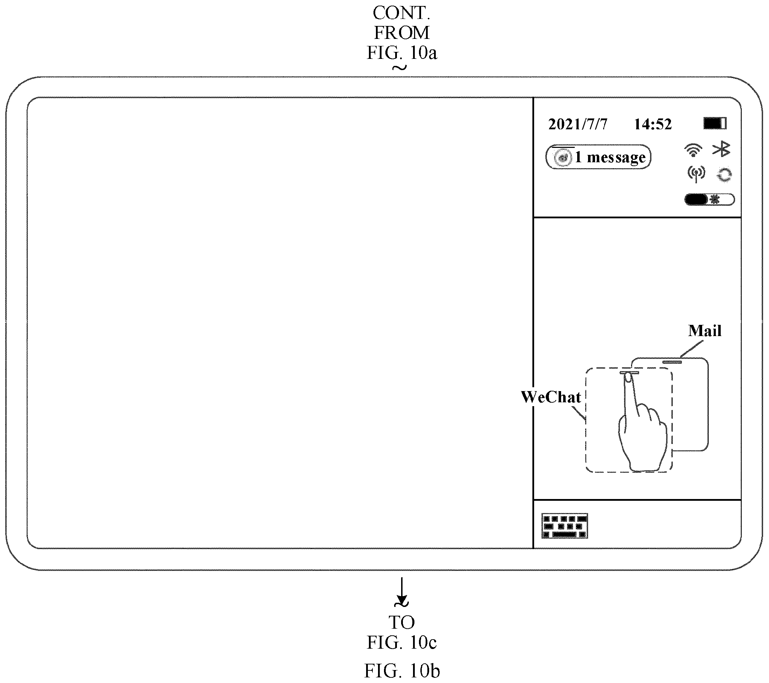

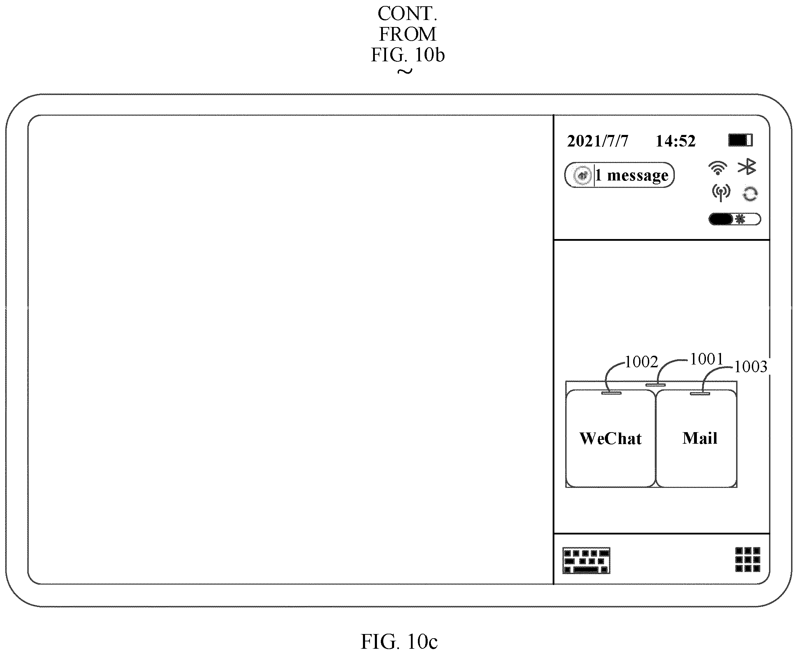

For example, FIG. 10 is a schematic diagram of desktop display of a tablet computer. It should be understood that the tablet computer has a touchscreen, and a user can operate a desktop through gestures. In the interface in FIG. 10a, the user may drag a drag bar of the window thumbnail of WeChat with one finger to approach or be superimposed onto the window thumbnail of Mail from the left side of the window thumbnail of Mail (namely, the foregoing sixth operation). As shown in the interface in FIG. 10b, the window thumbnail of WeChat is superimposed from the left side of the window thumbnail of Mail onto the window thumbnail of Mail. After 1 second, as shown in the interface in FIG. 10c, in response to this operation, the terminal device makes the window thumbnail of Mail (namely, the window thumbnail of the first application) and the window thumbnail of WeChat (namely, the window thumbnail of the second application) form a window group. In addition, a length and a width of the window thumbnail of WeChat can be adaptively adjusted to be a length and a width of the window thumbnail of Mail. The user may move the window group by dragging a drag bar 1001 of the window group. The window thumbnail of WeChat and the window thumbnail of Mail in the window group may be closed, zoomed in, zoomed out, or moved at the same time.

It should be understood that the foregoing 1 second is merely used as an example, which is not limited in this embodiment of the present application.

In the window group, the user may drag a drag bar 1002 of the window thumbnail of WeChat or drag a drag bar 1003 of the window thumbnail of Mail to separate the window thumbnail of WeChat from the window thumbnail of Mail.

To achieve a same effect in different scenarios, the sixth operation may differ. For example, when the sixth operation is a gesture on a touchpad, the user may operate the touchpad to press and hold a left button in a window thumbnail to drag a drag bar of the window thumbnail, and slide on the touchpad to move the window thumbnail to a specified position (namely, the foregoing sixth operation). When the sixth operation is an action of operating a mouse, the user may operate the mouse to press and hold a left button of the mouse in a window thumbnail to drag a drag bar of the window thumbnail, and scroll a scroll wheel of the mouse to move the window thumbnail to a specified position (namely, the foregoing sixth operation).

Optionally, in the foregoing window group formed by the window thumbnail of WeChat and the window thumbnail of Mail, the user may move, with one finger, a position of a border between the window thumbnail of WeChat and the window thumbnail of Mail. In response to this operation, the terminal device may adjust proportions of the window thumbnail of WeChat and the window thumbnail of Mail in the window group.

When the user operates a touchpad, the user may move a pointer to the position of the border between the window thumbnail of WeChat and the window thumbnail of Mail, and then press and hold a left button and slide on the touchpad to move the border to a specified position. When the user operates a mouse, the user may move a pointer to the position of the border between the window thumbnail of WeChat and the window thumbnail of Mail, and then press and hold a left button and move leftward or rightward to move the border to a specified position.

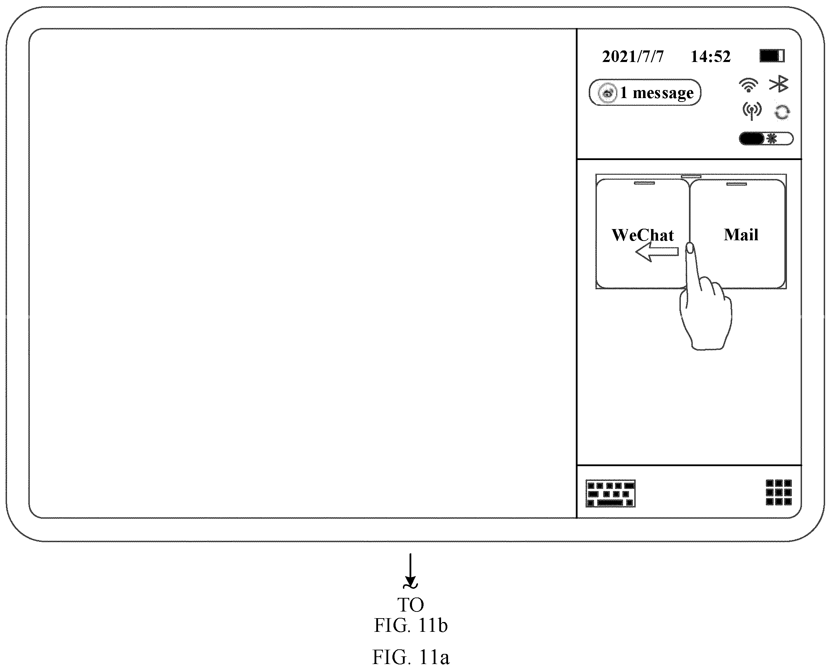

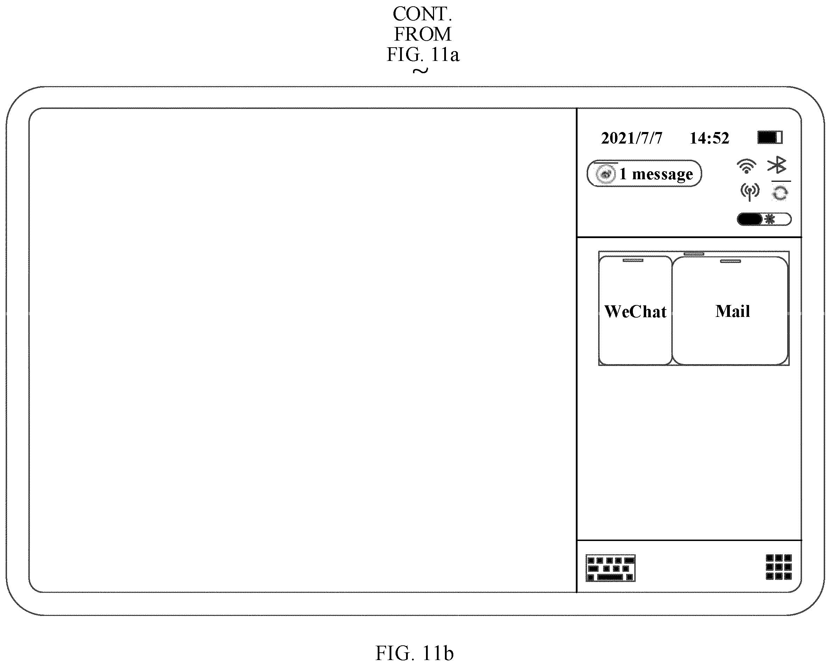

For example, FIG. 11 is a schematic diagram of desktop display of a tablet computer. It should be understood that the tablet computer has a touchscreen, and a user can operate a desktop through gestures. In the interface in FIG. 11a, in the foregoing window group formed by the window thumbnail of WeChat and the window thumbnail of Mail, the user may move leftward, with one finger, a position of a border between the window thumbnail of WeChat and the window thumbnail of Mail. As shown in the interface in FIG. 11a, in response to this operation, the terminal device reduces a length of the window thumbnail of WeChat and increases a length of the window thumbnail of Mail. It should be understood that a reduced length of the window thumbnail of WeChat and an increased length of the window thumbnail of Mail may be determined by a distance by which the user moves the finger.

In the terminal device desktop management method provided in this embodiment of the present application, when the sixth operation performed by the user is detected, window thumbnails of different applications can be made form a window group, and a plurality of window thumbnails in the window group can be managed at the same time by managing the window group, so that the user can less frequently manage a plurality of window thumbnails by using same operations, thereby improving user experience.

Optionally, there may be at least two window thumbnails of applications forming the window group.

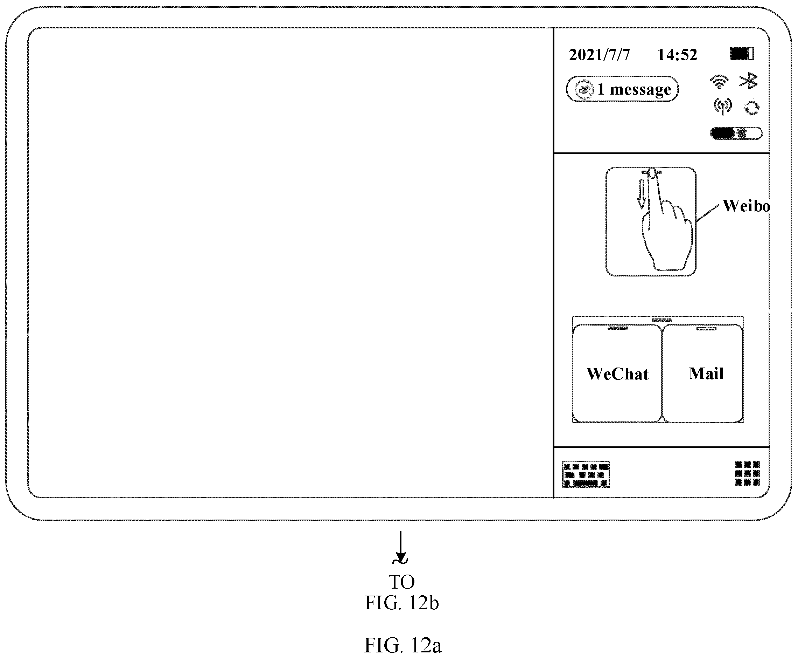

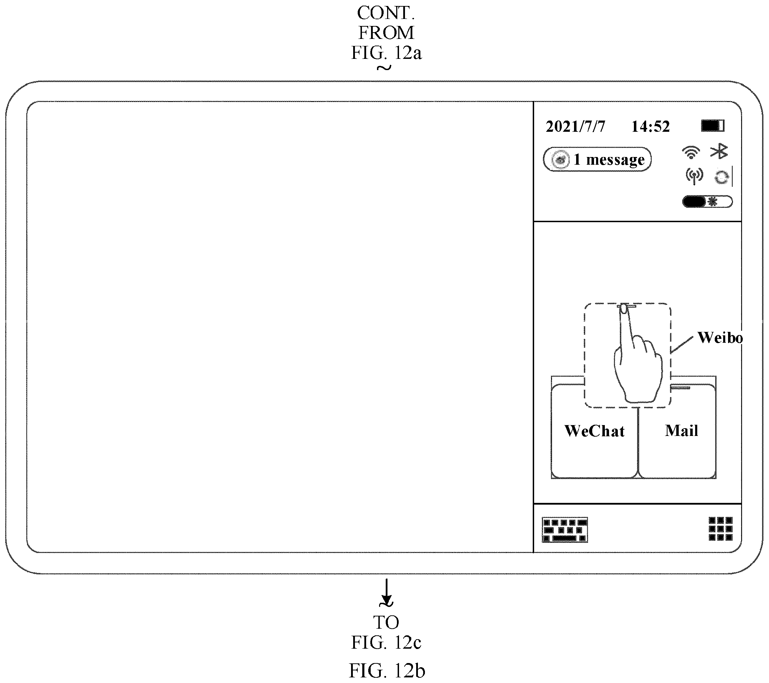

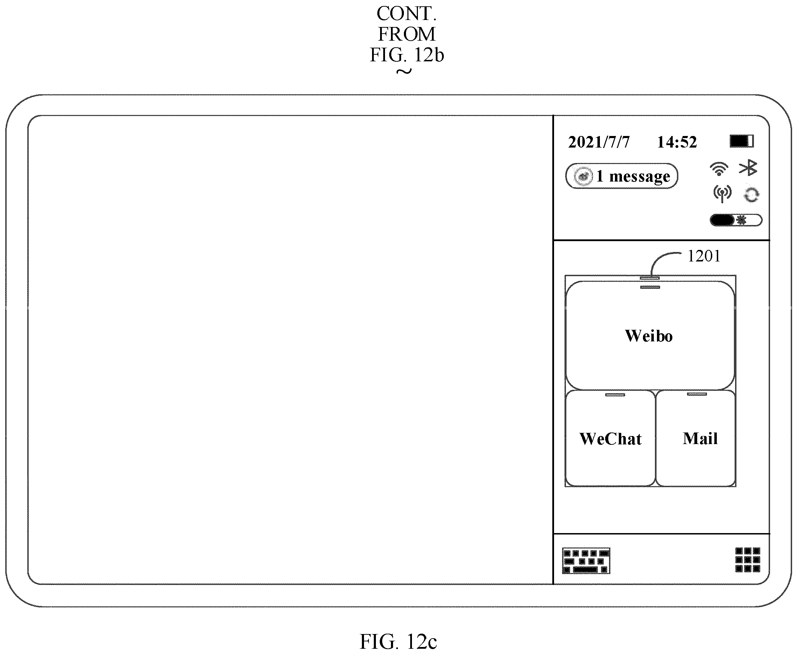

For example, FIG. 12 is a schematic diagram of desktop display of a tablet computer. It should be understood that the tablet computer has a touchscreen, and a user can operate a desktop through gestures. In the interface in FIG. 12a, the "multitasking background" includes a window thumbnail of Weibo and a window group (an original window group) including the window thumbnail of WeChat and the window thumbnail of Mail. The user may drag a drag bar of the window thumbnail of WeChat with one finger to approach or be superimposed onto the original window group from above the original window group (namely, the foregoing sixth operation). As shown in the interface in FIG. 12b, the window thumbnail of Weibo is superimposed from above the original window group onto the original window group. As shown in the interface in FIG. 12c, in response to this operation, the terminal device makes the original window group and the window thumbnail of Weibo form a new window group. In addition, a length of the window thumbnail of Weibo can be adaptively adjusted to be a length of the original window group. The user may move the new window group by dragging a drag bar 1201 of the window group.

It should be understood that window thumbnails in the new window group may be closed, zoomed in, zoomed out, or moved at the same time.

In the new window group, the user may drag the drag bar of the window thumbnail of Weibo to separate the window thumbnail of Weibo from the original window group. The user may also drag the drag bar of the window thumbnail of WeChat to separate the window thumbnail of WeChat from the window thumbnail of Weibo and the window thumbnail of Mail, where the window thumbnail of Weibo and the window thumbnail of Mail may automatically form a window group, and at the same time, a length of the window thumbnail of Weibo may be adaptively adjusted to be a length of the window thumbnail of Mail. The user may also drag a drag bar of the window thumbnail of Mail to separate the window thumbnail of Mail from the window thumbnail of Weibo and the window thumbnail of WeChat, where the window thumbnail of Weibo and the window thumbnail of WeChat may automatically form a window group, and at the same time, the length of the window thumbnail of Weibo may be adaptively adjusted to be a length of the window thumbnail of WeChat.

In an optional embodiment, the user may directly drag a file to a window thumbnail of an application in the "multitasking background", to share the file to the application, and in response to this operation, the terminal device displays the file in the window thumbnail of the application. The file may be a file in notification information in the "notification center", or may be a file in the "application interface".

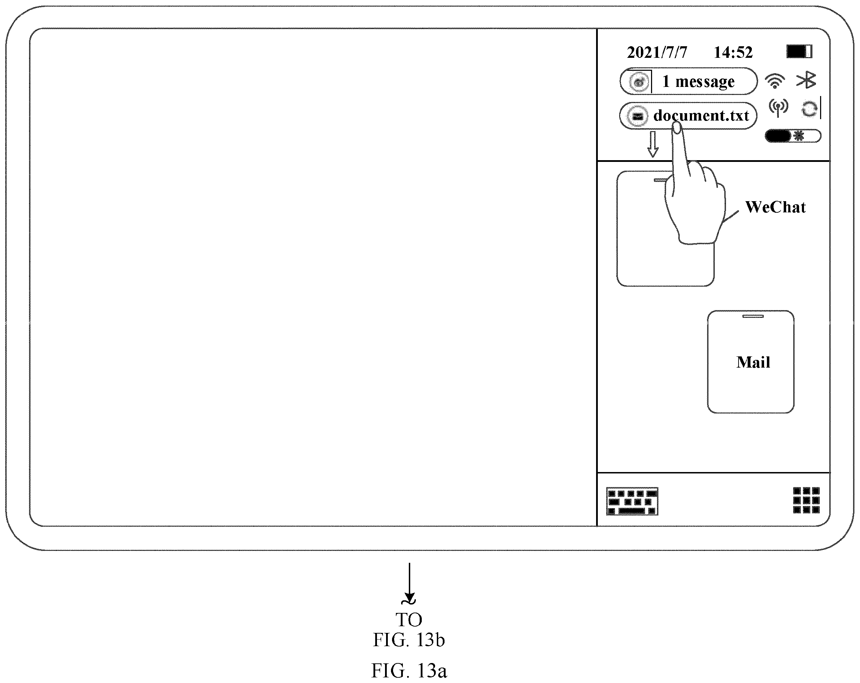

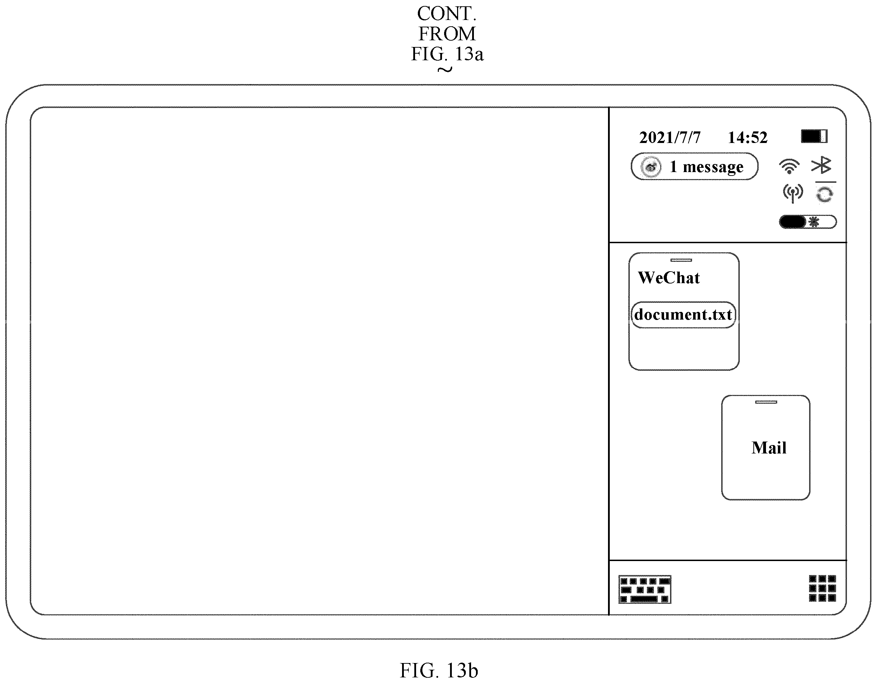

For example, FIG. 13 is a schematic diagram of desktop display of a tablet computer. It should be understood that the tablet computer has a touchscreen, and a user can operate a desktop through gestures. In the interface in FIG. 13a, notification information of Mail in the "notification center" includes document.txt, and the user may directly share the document to WeChat. The user may drag the document.txt with one finger to the window thumbnail of WeChat in the "multitasking background". As shown in the interface in FIG. 13b, in response to this operation, the tablet computer displays the document in the window thumbnail of WeChat, and at the same time, the notification information of Mail in the "notification center" disappears.

Optionally, the document is displayed in the window thumbnail of WeChat, and the user may share it to another application in the window thumbnail of WeChat, and may also delete the document.

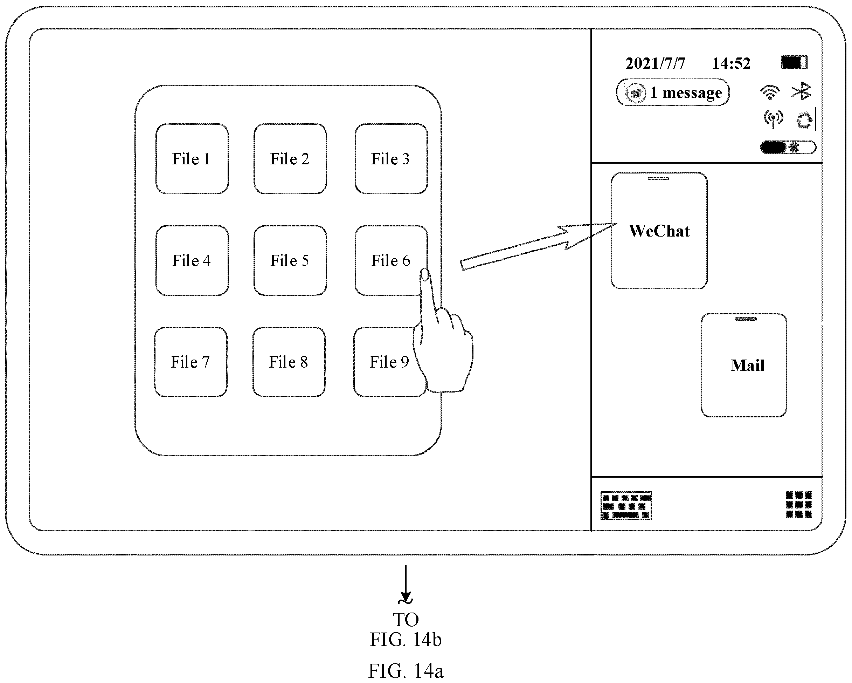

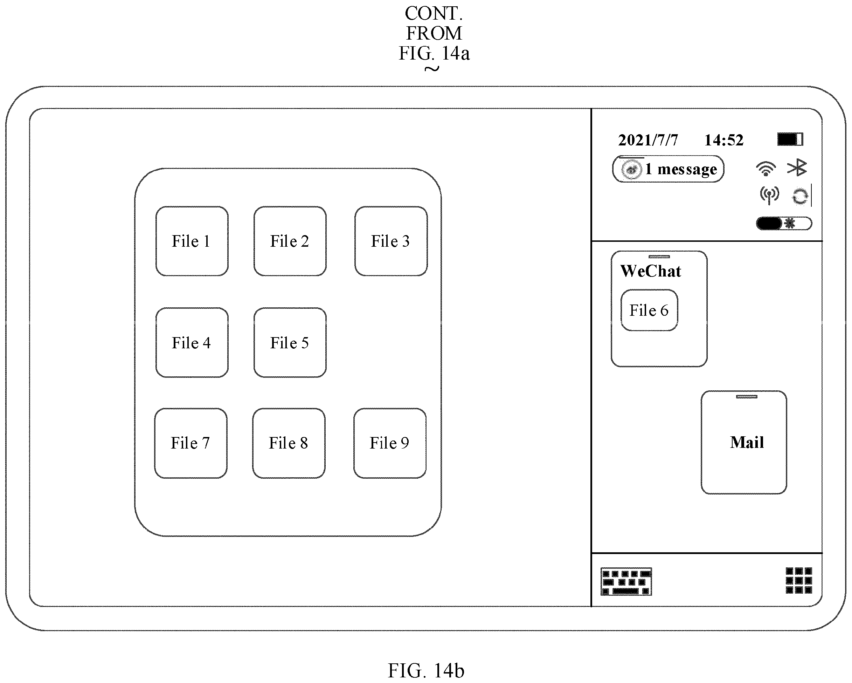

For example, FIG. 14 is a schematic diagram of desktop display of a tablet computer. It should be understood that the tablet computer has a touchscreen, and a user can operate a desktop through gestures. In interface in FIG. 14a, the "application interface" displays nine files: file 1, file 2, file 3, file 4, file 5, file 6, file 7, file 8, and file 9. The user may drag file 6 with one finger to the window thumbnail of WeChat in the "multitasking background". As shown in the interface in FIG. 14b, in response to this operation, the tablet computer displays file 6 in the window thumbnail of WeChat, and at the same time, file 6 in the "application interface" disappears.

When the user operates a touchpad, the user may operate the touchpad to move a pointer to a position of the file, and then press and hold a left button and slide on the touchpad to move the file to a specified position. When the user operates a mouse, the user may operate the mouse to move a pointer to a position of the file, and then press and hold a left button and drag the file to move the file to a specified position.

The terminal device desktop management method provided in this embodiment of the present application, a file in the "application interface" or the "notification center" can be directly shared to a window thumbnail in the "multitasking background", which can avoid a need for the user to open a plurality of types of software at the same time for sharing, thereby improving user experience.

In an optional embodiment, the terminal device detects a seventh operation performed by the user on the window thumbnail of the application, and the terminal device displays a to-do notification corresponding to the application in the "notification center" in response to the seventh operation. The application may be any application opened by the user.

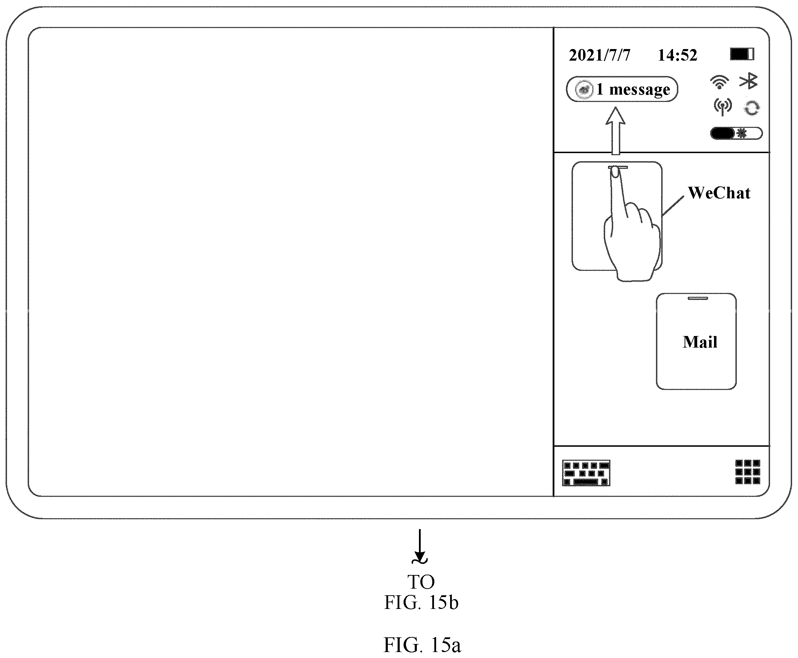

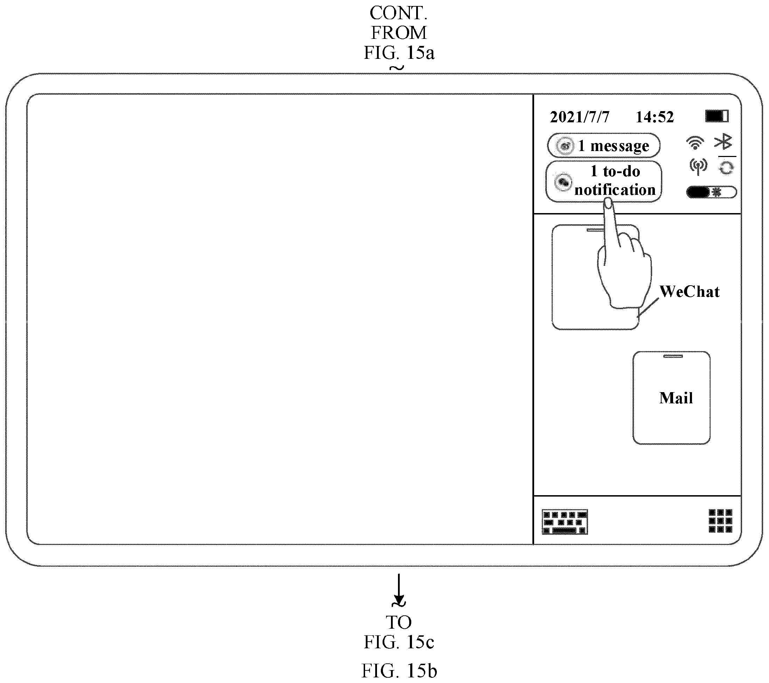

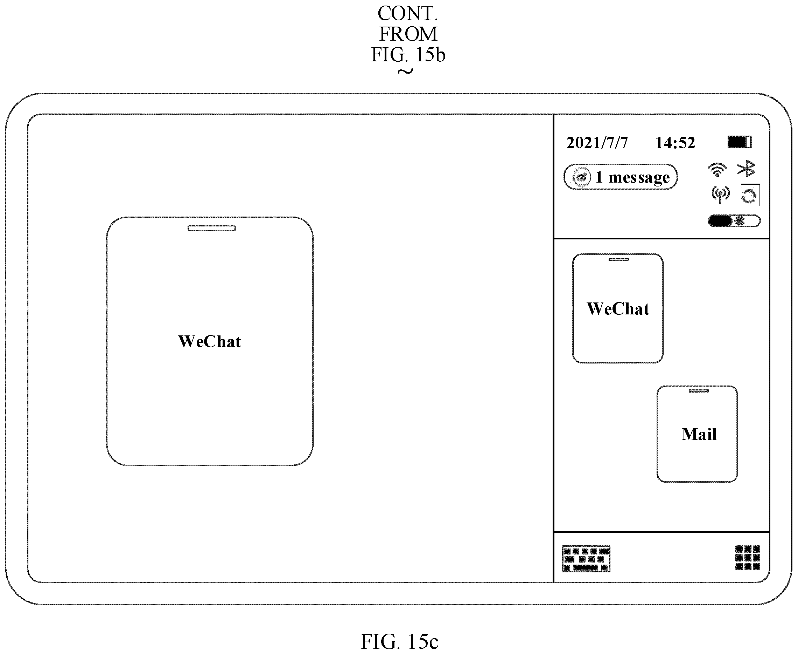

For example, FIG. 15 is a schematic diagram of desktop display of a tablet computer. It should be understood that the tablet computer has a touchscreen, and a user can operate a desktop through gestures. In the interface in FIG. 15a, the "multitasking background" includes a window thumbnail of WeChat and a window thumbnail of Mail. It should be understood that a quantity and positions of window thumbnails are merely used as an example, which is not limited in this embodiment of the present application. The user may drag a drag bar of the window thumbnail of WeChat (namely, the window thumbnail of the foregoing application) with one finger to the region of the "notification center" (namely, the foregoing seventh operation). As shown in the b interface in FIG. 15, in response to the seventh operation, the terminal device displays one to-do notification of WeChat in the region of the "notification center". The user may tap the to-do notification. As shown in the interface in FIG. 15c, in response to this operation, the terminal device displays the window of WeChat in the "application interface" for the user to process, and at the same time, the to-do notification in the "notification center" disappears.

In the terminal device desktop management method provided in this embodiment of the present application, when the seventh operation performed by the user is detected, a to-do notification of an application opened by the user is displayed in the notification center, to help the user quickly create the to-do notification and reduce operation steps for the user, thereby improving user experience.

In an optional embodiment, the terminal device detects an operation performed by the user on the function button of the application list, and the terminal device displays the application list in response to the operation, where the application list includes an icon of at least one application, and the at least one application includes the first application. The terminal device detects an eighth operation performed by the user on the icon of the first application, where the eighth operation is used to create a to-do notification corresponding to the first application. The terminal device displays the to-do notification corresponding to the first application in the notification center in response to the eighth operation.

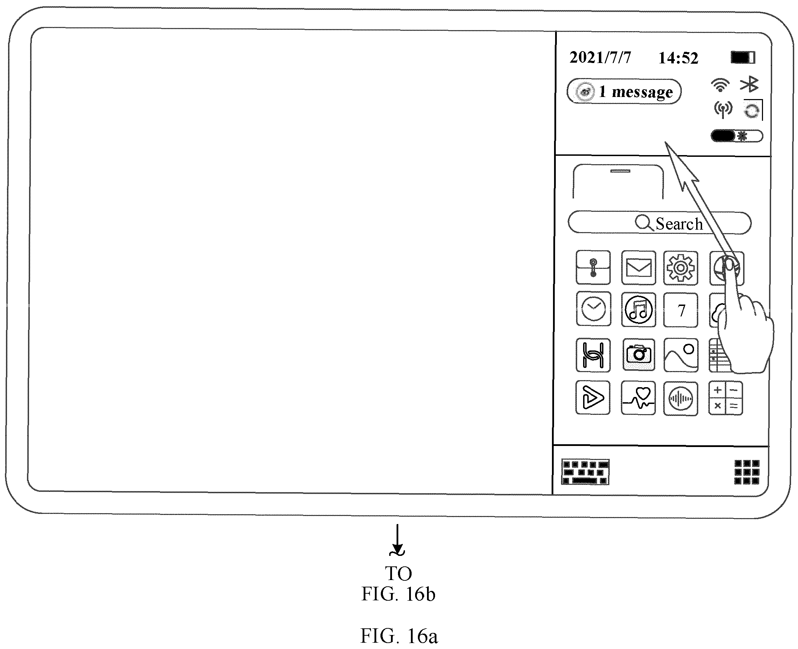

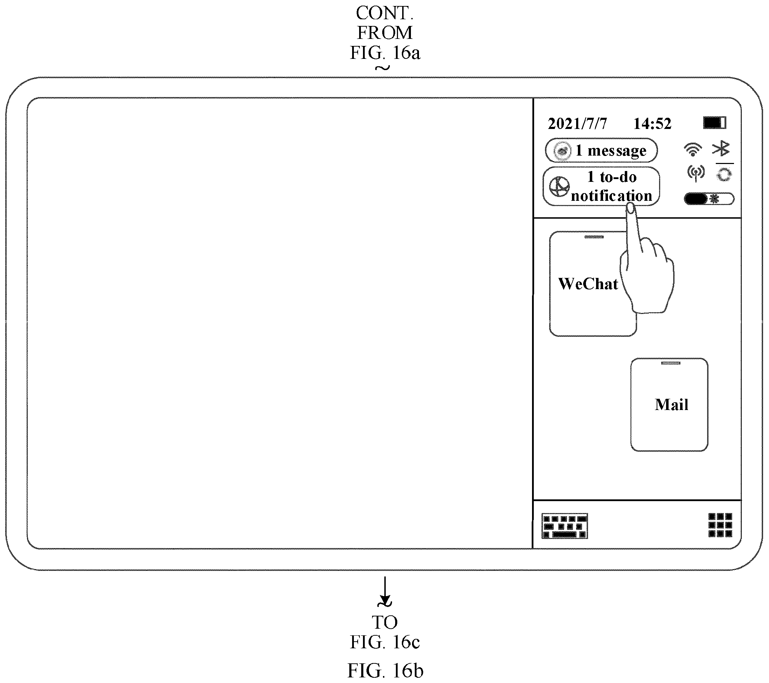

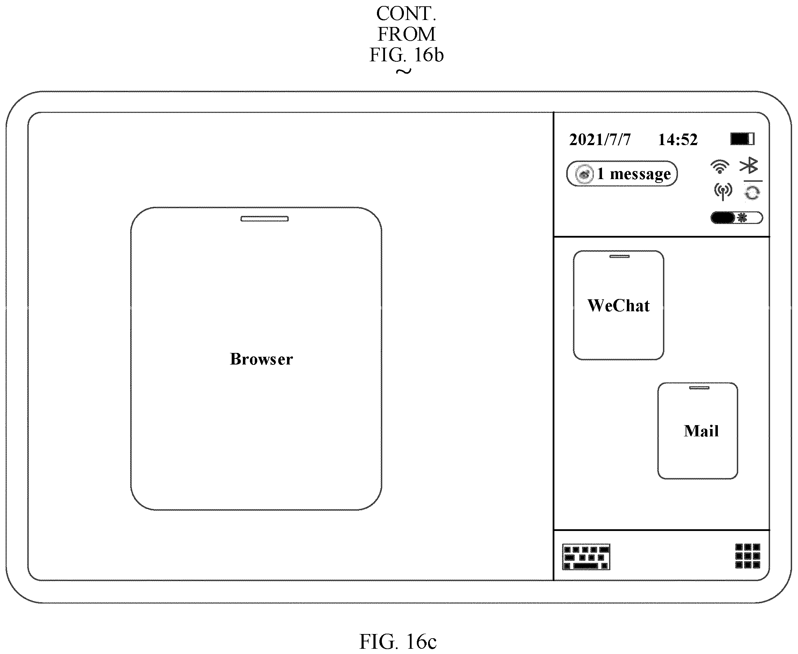

For example, FIG. 16 is a schematic diagram of desktop display of a tablet computer. It should be understood that the tablet computer has a touchscreen, and a user can operate a desktop through gestures. In the interface in FIG. 16a, the terminal device displays the application list in response to an operation of tapping the function button of the application list by the user (namely, the foregoing operation performed by the user on the function button of the application list). The application list may include applications such as File Manager, Email, Settings, Browser, Clock, Music, Calendar, Weather, Smart Life, Camera, Gallery, Memo, Video, Health, Recorder, and Calculator. The application list further includes a search control to provide the user with a function of searching for an application. It should be understood that the application list is not limited to the applications shown in the interface shown in FIG. 16a, and when there are many applications in the application list, the terminal device displays more applications in response to an operation of sliding the application list leftward, rightward, or downward by the user.

In the interface in FIG. 16a, the user may drag the icon of Browser (namely, the foregoing first application) with one finger to the region of the "notification center" (namely, the foregoing eighth operation). As shown in the b interface in FIG. 16, in response to the eighth operation, the terminal device displays one to-do notification of Browser in the region of the "notification center". The user may tap the to-do notification. As shown in the interface in FIG. 16c, in response to this operation, the terminal device displays the window of Browser in the "application interface" for the user to process, and at the same time, the to-do notification in the "notification center" disappears.

When the user operates a touchpad, the user may operate the touchpad to move a pointer to a drag bar of a window thumbnail or a position of application icon, and then press and hold a left button and slide on the touchpad to move the window thumbnail or the application icon to the "notification" (namely, the foregoing eighth operation). When the user operates a mouse, the user may operate the mouse to move a pointer to a drag bar of a window thumbnail or a position of application icon, and then press and hold a left button and drag the window thumbnail or the application icon to the "notification" (namely, the foregoing eighth operation).

In the terminal device desktop management method provided in this embodiment of the present application, when the eighth operation performed by the user is detected, a to-do notification of an application not opened by the user is displayed in the notification center, to help the user quickly create the to-do notification and reduce operation steps for the user, thereby improving user experience.

In an optional embodiment, in the region of the "notification center", the terminal device detects an operation of sliding downward from the top of the region by the user, and in response to this operation, the terminal device may display more notification information and the function button of the control center.

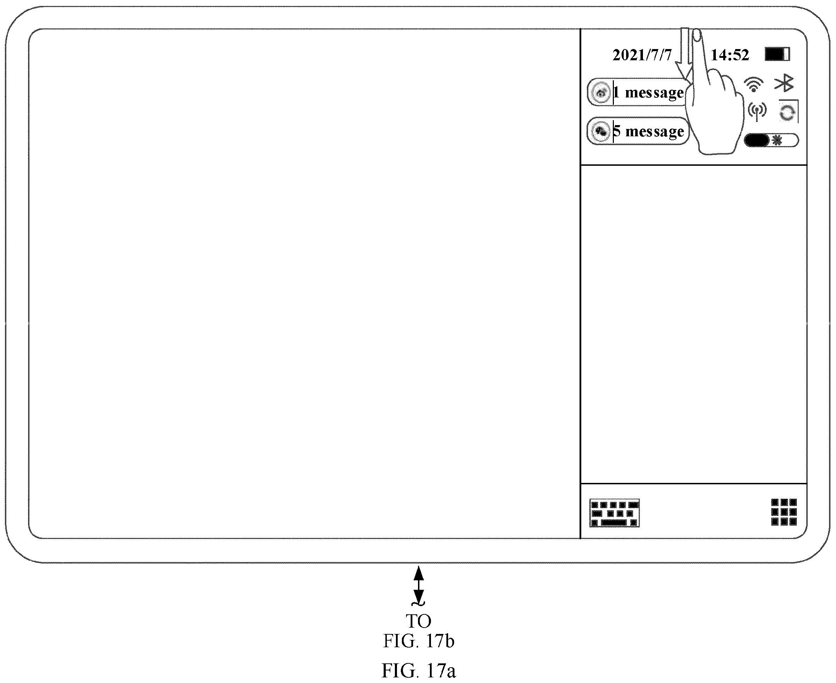

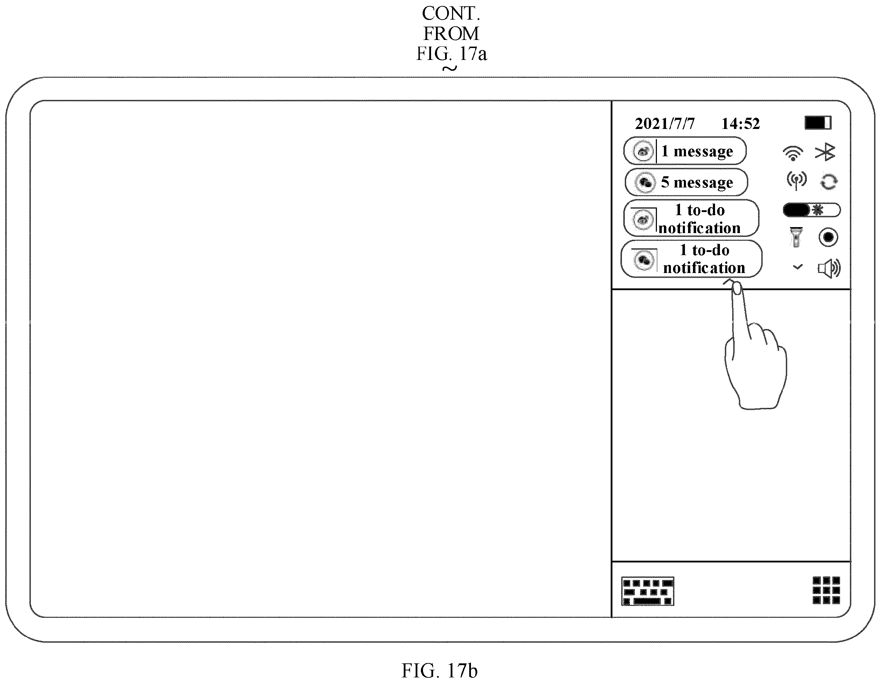

For example, FIG. 17 is a schematic diagram of desktop display of a tablet computer. It should be understood that the tablet computer has a touchscreen, and a user can operate a desktop through gestures. In the interface in FIG. 17a, the "notification center" includes one notification of Weibo, five notifications of WeChat, and the function button of the control center. The function button of the control center includes a function button for network connection, a function button for setting a Bluetooth connection, a function button for hotspot connection, a function button for screen rotation, and a control for desktop brightness adjustment, and the like. The user may slide one finger downward from the top of the "notification center". As shown in the b interface in FIG. 17, the terminal device detects the operation of sliding downward from the top the "notification center", and in response to this operation, expands the "notification center" downward to display one to-do notification of Weibo, one to-do notification of WeChat, a function button for flashlight, a function button for video recording, a function button for alarm, a function button for setting sound, and the like. It should be understood that the one to-do notification of Weibo may be displayed by the terminal device in response to an operation of dragging the window thumbnail of Weibo by the user, or may be displayed by the terminal device in response to an operation of dragging the icon of Weibo by the user. The one to-do notification of WeChat may be displayed by the terminal device in response to an operation of dragging the window thumbnail of WeChat by the user, or may be displayed by the terminal device in response to an operation of dragging the icon of WeChat by the user. It should be further understood that the function button of the control center is merely used as an example, which is not limited in this embodiment of the present application.

In the interface in FIG. 17b, the expanded "notification center" includes a downward-pointing triangle control, and the user may tap the triangle control with one finger to collapse the expanded "notification center" upward. After the terminal device detects that the triangle control is triggered, the interface in FIG. 17a may be displayed.

In the terminal device desktop management method provided in this embodiment of the present application, when an operation of sliding downward from the uppermost performed by the user on the "notification center" is detected, more notification information and the function button of the control center are displayed in the "notification center", to help the user view more notification information, and provide the user with more shortcut buttons, thereby reducing tedious operations of searching for function buttons, and improving user experience.

Optionally, when the user operates a touchpad, to display more notification information and the function button of the control center in the "notification center", the user may operate the touchpad to move a pointer to the top of the "notification center" and then slide upward. When the user operates a mouse, to display more notification information and the function button of the control center in the "notification center", the user may operate the mouse to move a pointer to the top of the " notification center" and then slide upward.

In an optional embodiment, the terminal device detects a ninth operation performed by the user, and in response to this operation, displays an "information center", where the "information center" may include a search bar, an application, and an application widget. The user may search for any content in the search bar. The application may be preset or may be updated based on frequency or duration of the use of application software by the user. The application widget may include work or life information such as weather, schedule, road conditions. The application widget may be updated based on latest information of use by the user.

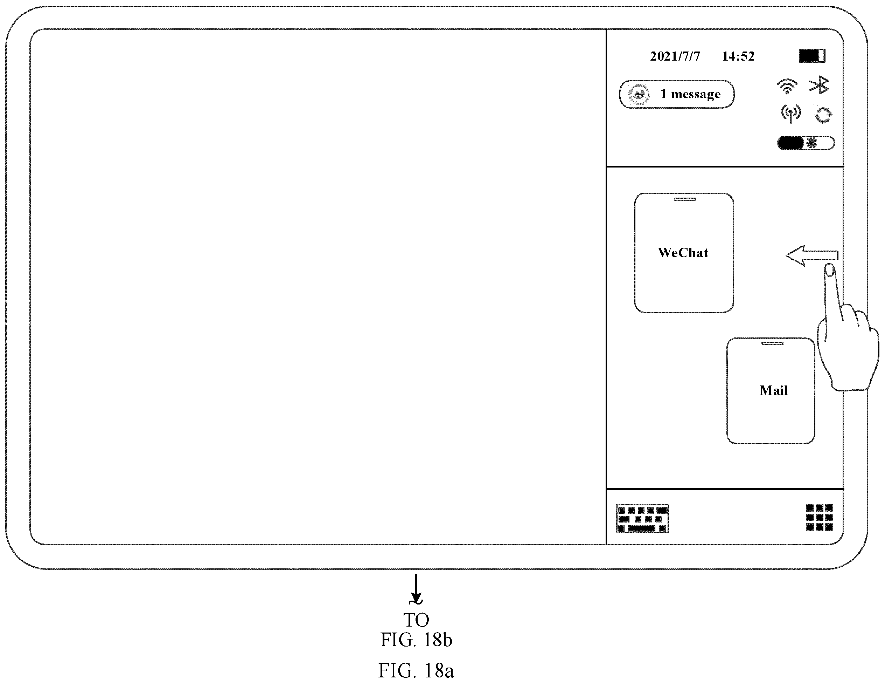

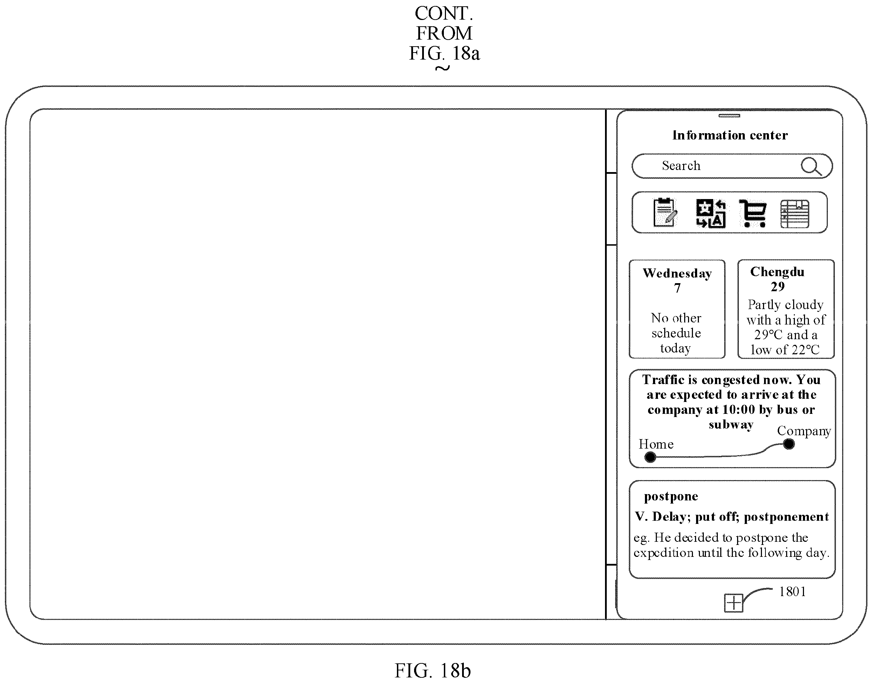

For example, FIG. 18 is a schematic diagram of desktop display of a tablet computer. In the interface in FIG. 18a, the tablet computer displays "desktop center", and the user may slide leftward from the right edge of the "desktop center" (namely, the foregoing ninth operation). As shown in the interface in FIG. 18b, in response to this operation, the tablet computer displays the "information center". It should be understood that a region occupied by the "information center" on the desktop should be less than or equal to a region occupied by the "desktop center".

The "information center" includes a search bar, applications, and application widgets. The applications include Notes, Translate, Shopping Cart, and Memo. The application widgets Schedule, Weather, Road Conditions, and Translate. The user may tap an add control 1801 to add another application widget. When the terminal device detects that the add control 1801 is triggered, another application widget in the tablet computer is displayed, and the user may drag the another application widget to the "information center". When there are many application widgets in the "information center", the user may view content of more widgets by sliding upward or downward in region of widgets.

Optionally, when the tablet computer displays the first taskbar (a compact taskbar), the ninth operation may be: sliding leftward from the right edge of the first taskbar twice.

When the user operates a touchpad, to display the "information center", the user may operate the touchpad to move a pointer to the right edge of the "desktop center" and then slide rightward (namely, the foregoing ninth operation). When the tablet computer displays the first taskbar (a compact taskbar), the user may operate the touchpad to move the pointer to the right edge of the "desktop center" and then slide rightward twice. When the user operates a mouse, to display the "information center", the user may operate the mouse to move a pointer to the right edge of the "desktop center" and then slide rightward (namely, the foregoing ninth operation). When the tablet computer displays the first taskbar (a compact taskbar), the user may operate the mouse to move the pointer to the right edge of the "desktop center" and then slide rightward twice.

In the terminal device desktop management method provided in this embodiment of the present application, when the ninth operation performed by the user is detected, the window of the "information center" is displayed, to provide the user with a search bar, applications, and various daily work and life information. This helps reduce operations of viewing a plurality of types of software by the user, thereby improving user experience.

Optionally, the search bar in the "information center" of the terminal device may provide the user with two operation methods. In a first feasible operation method, the user may enter content in the search bar and then tap a search button or an enter button, and in response to this operation, the terminal device displays a search result interface. For example, the search result interface may display application software related to the search content and messages related to the search content in different software. In a second feasible operation method, the user may enter content in the search bar and then tap an application displayed in the "information center", and in response to this operation, the terminal device displays the search content in the application.

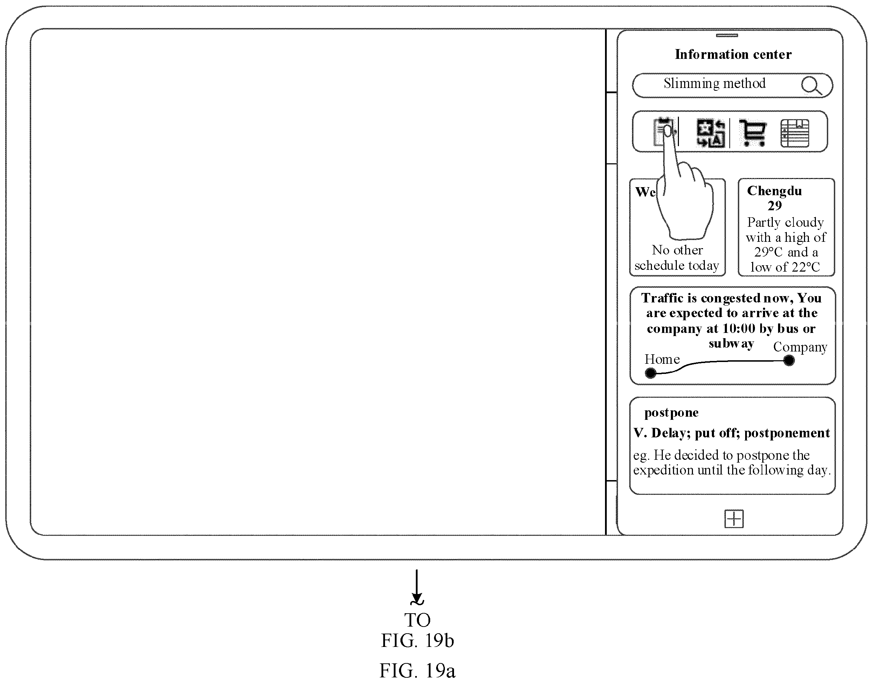

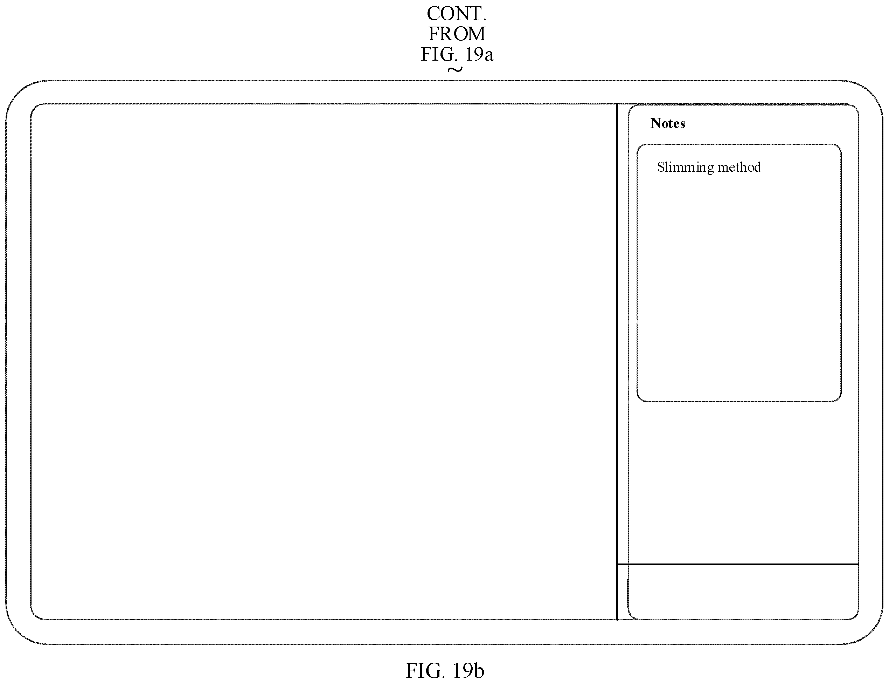

For example, FIG. 19 is a schematic diagram of desktop display of a tablet computer. In the interface in FIG. 19a, the user enters "Slimming method" in the search bar and taps an icon corresponding to the application of Notes. As shown in the interface in FIG. 19b, in response to this operation, the tablet computer displays a window of Notes, and displays the slimming method in the window of Notes. The user may save the note for recording.

Optionally, in the b interface in FIG. 19, the user may slide one finger upward from the bottom edge of the region of the "information center", and in response to this operation, the terminal device exits the window of Notes, and displays the interface in FIG. 17a.

Optionally, in the window of the "information center", the user may drag a drag bar of the window of the "information center" to move a position of the window of the "information center", so that the window of the "information center" is in a free state.

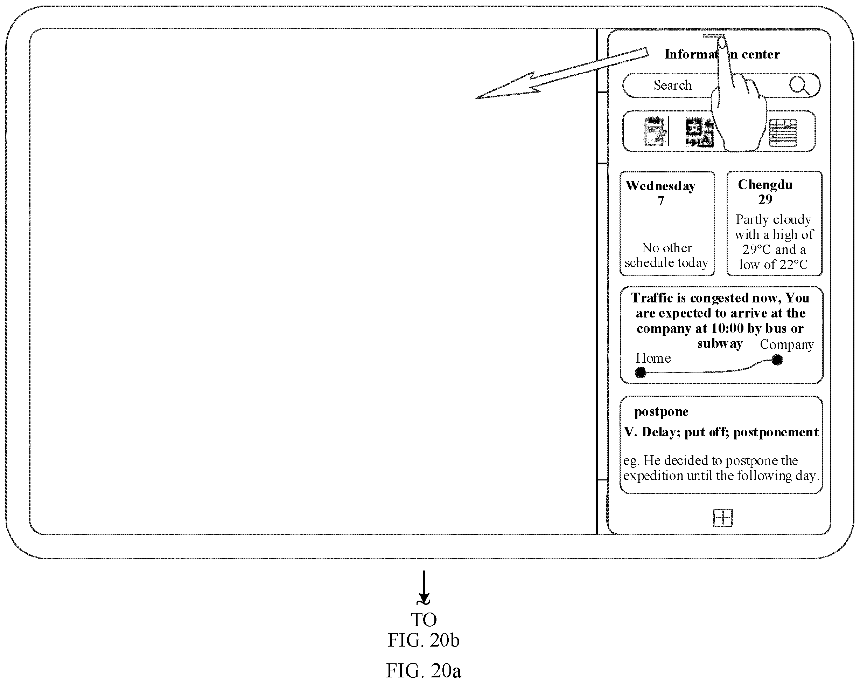

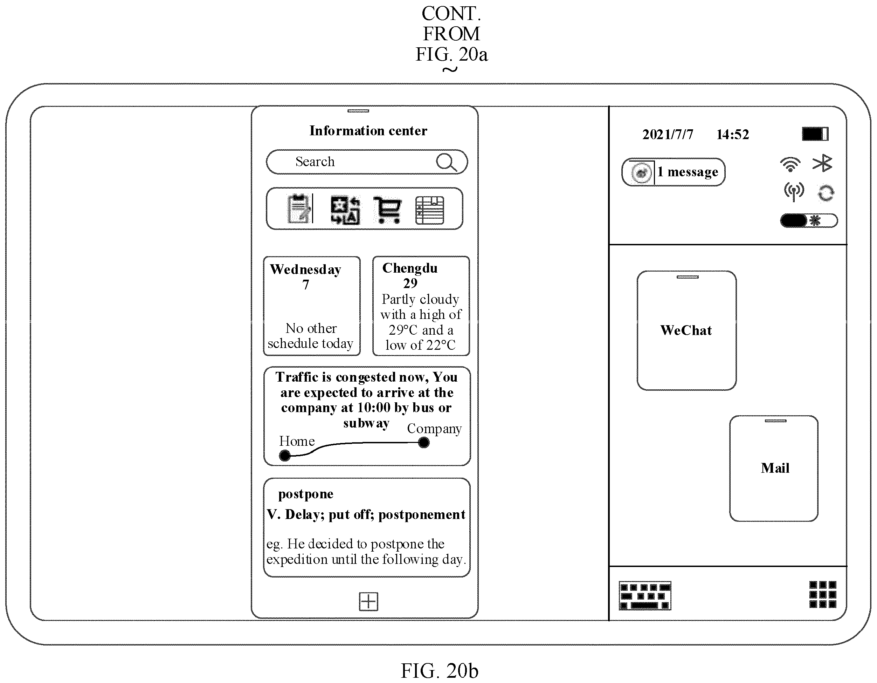

For example, FIG. 20 is a schematic diagram of desktop display of a tablet computer. In the interface in FIG. 18a, the "information center" is displayed on a basis of the "desktop center". The user may drag a drag bar of the information center with one finger to move it to the "application interface", and the position of the window of the "information center" is moved to the "application interface". As shown in the interface in FIG. 20b, in response to this operation, the tablet computer displays the window of the "information center" in the region of the "application interface", and a specific position of the window of the "information center" in the "application interface" is determined by a position to which the user moves the finger.

It should be understood that in the interface in FIG. 20b, the window of the "information center" is in a free state. User experience provided when the window of the "information center" is not in a free state is still applicable. The user may move the window of the "information center" to the region of the "desktop center" by dragging the drag bar of the window of the "information center", and in response to this operation, the tablet computer may fix the window of the "information center".

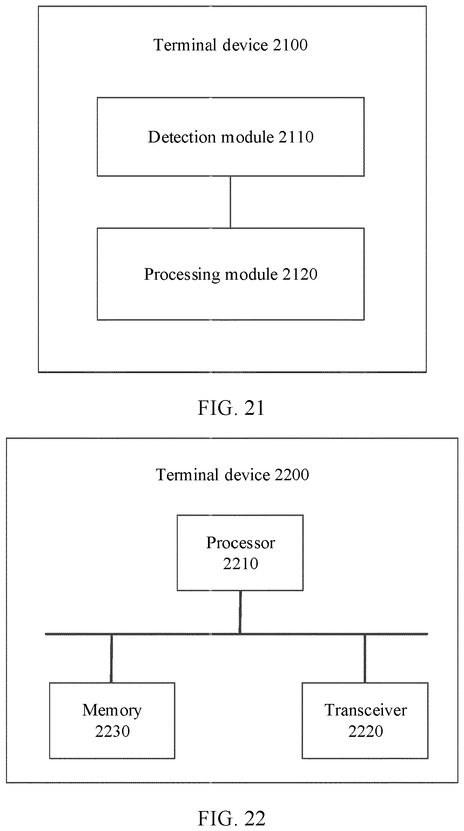

The foregoing describes in detail the data terminal device desktop management methods provided in the embodiments of the present application with reference to FIG. 1 to FIG. 20. The following describes in detail terminal devices provided in the embodiments of the present application with reference to FIG. 21 and FIG. 22.

FIG. 21 shows a terminal device 2100 according to an embodiment of the present application. The terminal device 2100 includes a detection module 2110 and a processing module 2120. The detection module 2110 is configured to detect a first operation performed by a user on a first window, where the first operation is used to minimize the first window, the first window is a window of an application or a window of a notification center, and an icon of a first application corresponding to the first window is displayed in a first taskbar. The processing module 2120 is configured to minimize the first window into the icon of the first application in response to the first operation. The detection module 2110 is further configured to detect a second operation performed by the user on the first taskbar, where the second operation is used to expand the first taskbar. The processing module 2120 is further configured to expand the first taskbar in response to the second operation, to obtain a second taskbar, where the second taskbar includes a thumbnail of the first window.

Optionally, the detection module 2110 is further configured to: detect a third operation performed by the user on the first window, where the third operation is used to obtain function buttons of maximize, minimize, and close. The processing module 2120 is further configured to: display the function buttons of maximize, minimize, and close in a region of the first window in response to the third operation.

Optionally, the first taskbar further includes a function button of a control center, the second taskbar includes a first region and a second region, a window thumbnail of the notification center and the function button of the control center are displayed in the first region, and a window thumbnail of the application is displayed in the second region.

Optionally, the first window is the window of the notification center, and the thumbnail of the first window is displayed in the first region; or the first window is the window of the application, and the thumbnail of the first window is displayed in the second region.

Optionally, the detection module 2110 is further configured to: detect a fourth operation performed by the user on the second region, where the fourth operation is used to move a display position of the window thumbnail of the application in the second region. The processing module 2120 is further configured to: move the display position of the window thumbnail of the application in the second region in response to the fourth operation.

Optionally, the detection module 2110 is further configured to: detect a fifth operation performed by the user on the second region, where the fifth operation is used to zoom in or out the window thumbnail of the application in the second region. The processing module 2120 is further configured to: zoom in or out the window thumbnail of the application in the second region in response to the fifth operation.

Optionally, the second region further includes a thumbnail of a second window, and the second window corresponds to a second application. The detection module 2110 is further configured to: detect a sixth operation performed by the user on the thumbnail of the first window, where the sixth operation is used to make the thumbnail of the first window and the thumbnail of the second window form a window group. The processing module 2120 is further configured to: make the thumbnail of the first window and the thumbnail of the second window form the window group in response to the sixth operation. The detection module 2110 is further configured to: detect an operation of zooming in, zooming out, or moving the window group by the user. The processing module 2120 is further configured to: zoom in, zoom out, or move the window group in response to the operation of zooming in, zooming out, or moving the window group by the user.

Optionally, the detection module 2110 is further configured to: detect an operation of changing a size of the thumbnail of the first window by the user. The processing module 2120 is further configured to: adjust the size of the thumbnail of the first window in response to the operation of changing the size of the thumbnail of the first window by the user, and adaptively adjust a size of the thumbnail of the second window, to obtain an adjusted window group, where the adjusted window group includes an adjusted thumbnail of the first window and an adjusted thumbnail of the second window, and a sum of a size of the adjusted thumbnail of the first window and a size of the adjusted thumbnail of the second window is equal to a size of the window group.

Optionally, the first window is the window of the application. The detection module 2110 is further configured to: detect a seventh operation performed by the user on the thumbnail of the first window, where the seventh operation is used to create a to-do notification corresponding to the first application. The processing module 2120 is further configured to: display the to-do notification corresponding to the first application in the first region in response to the seventh operation.

Optionally, the second taskbar further includes a function button of an application list. The detection module 2110 is further configured to: detect an operation performed by the user on the function button of the application list. The processing module 2120 is further configured to: display the application list in response to the operation performed by the user on the function button of the application list, where the application list includes an icon of at least one application, and the at least one application includes the first application. The detection module 2110 is further configured to: detect an eighth operation performed by the user on the icon of the first application, where the eighth operation is used to create a to-do notification corresponding to the first application. The processing module 2120 is further configured to: display the to-do notification corresponding to the first application in the first region in response to the eighth operation.

Optionally, the detection module 2110 is further configured to: detect a ninth operation performed by the user on the second taskbar, where the ninth operation is used to display an interface of an information center. The processing module 2120 is further configured to: display the interface of the information center in response to the ninth operation.

It should be understood that the terminal device 2100 herein is embodied in a form of function modules. The term "module" herein may be an application-specific integrated circuit (application specific integrated circuit, ASIC), an electronic circuit, a processor for executing one or more software or firmware programs (for example, a shared processor, a dedicated processor, or a processor group), a memory, a combinational logic circuit, and/or another suitable component supporting the described functions. In an optional example, a person skilled in the art may understand that the terminal device 2100 may be specifically the terminal device in the foregoing method embodiment, or functions of the terminal device in the foregoing method embodiment may be integrated in the terminal device 2100. The terminal device 2100 may be configured to perform the processes and/or steps corresponding to the terminal device in the method embodiment. To avoid repetition, details are not described herein again.

The terminal device 2100 has functions of implementing corresponding steps performed by the terminal device in the foregoing method embodiment. The functions may be implemented by hardware, or implemented by executing corresponding software by hardware. The hardware or software includes one or more modules that correspond to the foregoing functions.

In this embodiment of the present application, the terminal device 2100 in FIG. 21 may alternatively be a chip or a chip system, such as a system on chip (system on chip, SoC).

FIG. 22 is a schematic block diagram of another terminal device 2200 according to an embodiment of the present application. The terminal device 2200 includes a processor 2210, a transceiver 2220, and a memory 2230. The processor 2210, the transceiver 2220, and the memory 2230 communicate with each other through an internal connection path. The memory 2230 is configured to store instructions, and the processor 2210 is configured to execute the instructions stored in the memory 2230, to control the transceiver 2220 to send a signal and/or receive a signal.

It should be understood that the terminal device 2200 may be specifically the terminal device in the foregoing method embodiment, or functions of the terminal device in the foregoing method embodiment may be integrated in the terminal device 2200. The terminal device 2200 may be configured to perform the steps and/or processes corresponding to the terminal device in the method embodiment. Optionally, the memory 2230 may include a read-only memory and a random access memory, and provide instructions and data to the processor. A part of the memory may further include a nonvolatile random access memory. For example, the memory may further store information about a device type. The processor 2210 may be configured to execute the instructions stored in the memory, and when the processor executes the instructions, the processor may execute various steps and/or processes corresponding to the terminal device in the foregoing method embodiment.

It should be understood that, in this embodiment of the present application, the processor 2210 may be a central processing unit (central processing unit, CPU), and the processor may alternatively be another general purpose processor, a digital signal processor(DSP), an application-specific integrated circuit (ASIC), a field programmable gate array (FPGA) or another programmable logical device, a discrete gate or transistor logic device, a discrete hardware assembly, or the like. The general purpose processor may be a microprocessor or the processor may be any conventional processor or the like.

During an implementation process, the steps of the foregoing method may be completed by using a hardware integrated logic circuit in the processor or instructions in a form of software in the processor. Steps of the method disclosed with reference to the embodiments of the present application may be directly executed and accomplished by a hardware processor, or may be executed and accomplished by a combination of hardware and software modules in a processor. A software module may be located in a mature storage medium in the art, such as a random access memory, a flash memory, a read-only memory, a programmable read-only memory, an electrically erasable programmable memory, a register, or the like. The storage medium is located in the memory, and the processor executes the instructions in the memory and completes the steps of the foregoing method in combination with hardware of the processor. To avoid repetition, details are not described herein again.

The present application further provides a computer-readable storage medium. The computer-readable storage medium is configured to store a computer program, and the computer program is configured to implement the method corresponding to the terminal device in the foregoing method embodiment.

The present application further provides a chip system. The chip system is configured to support the terminal device in the foregoing method embodiment to implement the functions illustrated in the embodiment of the present application.

The present application further provides a computer program product. The computer program product includes a computer program (which may also be referred to as code or instructions), and when the computer program is run on a computer, the computer may perform the method corresponding to the terminal device illustrated in the foregoing method embodiment.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely logical function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to an actual requirement to achieve the objectives of the solutions of the embodiments.

In addition, functional units in the embodiments of the present application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of the present application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present application. The foregoing storage medium includes: a medium that can store program code, such as a USB flash drive, a removable hard disk, a read-only memory (read-only memory, ROM), a random access memory (random access memory, RAM), a magnetic disk, or an optical disc.

## Claims

1. A terminal device desktop management method, comprising:
detecting (S301), by a terminal device, a first operation performed by a user on a first window, wherein the first operation is used to minimize the first window, the first window is a window of an application or a window of a notification center, and an icon of a first application corresponding to the first window is displayed in a first taskbar;
minimizing (S302), by the terminal device, the first window into the icon of the first application in response to the first operation;
detecting (S303), by the terminal device, a second operation performed by the user on the first taskbar, wherein the second operation is used to expand the first taskbar; and
expanding (S304), by the terminal device, the first taskbar in response to the second operation, to obtain a second taskbar, wherein the second taskbar comprises a thumbnail of all the windows shrunk into the first taskbar by using the first operation.

2. The method according to claim 1, wherein before the detecting (S301), by the terminal device, the first operation of the user on the first window, the method further comprises:
detecting, by the terminal device, a third operation performed by the user on the first window, wherein the third operation is used to obtain function buttons of maximize, minimize, and close; and
displaying, by the terminal device, the function buttons of maximize, minimize, and close in a region of the first window in response to the third operation.

3. The method according to claim 1, wherein the first taskbar further comprises a function button (202) of a control center, the second taskbar comprises a first region and a second region, a window thumbnail of the notification center and the function button (202) of the control center are displayed in the first region, and a window thumbnail of the application is displayed in the second region.

4. The method according to claim 3, wherein the first window is the window of the notification center, and the thumbnail of the first window is displayed in the first region; or the first window is the window of the application, and the thumbnail of the first window is displayed in the second region.

5. The method according to claim 3, wherein the method further comprises:
detecting, by the terminal device, a fourth operation performed by the user on the second region, wherein the fourth operation is used to move a display position of the window thumbnail of the application in the second region; and
moving, by the terminal device, the display position of the window thumbnail of the application in the second region in response to the fourth operation.

6. The method according to claim 3, wherein the method further comprises:
detecting, by the terminal device, a fifth operation performed by the user on the second region, wherein the fifth operation is used to zoom in or out the window thumbnail of the application in the second region; and
zooming in or out, by the terminal device, the window thumbnail of the application in the second region in response to the fifth operation.

7. The method according to claim 3, wherein the second region further comprises a thumbnail of a second window, and the second window corresponds to a second application; and
the method further comprises:
detecting, by the terminal device, a sixth operation performed by the user on the thumbnail of the first window, wherein the sixth operation is used to make the thumbnail of the first window and the thumbnail of the second window form a window group;
making, by the terminal device, the thumbnail of the first window and the thumbnail of the second window form the window group in response to the sixth operation;
detecting, by the terminal device, an operation of zooming in, zooming out, or moving the window group by the user; and
zooming in, zooming out, or moving, by the terminal device, the window group in response to the operation of zooming in, zooming out, or moving the window group by the user.

8. The method according to claim 7, wherein the method comprises:
detecting, by the terminal device, an operation of changing a size of the thumbnail of the first window by the user; and
adjusting, by the terminal device, the size of the thumbnail of the first window in response to the operation of changing the size of the thumbnail of the first window by the user, and adaptively adjusting a size of the thumbnail of the second window, to obtain an adjusted window group, wherein the adjusted window group comprises an adjusted thumbnail of the first window and an adjusted thumbnail of the second window, and a sum of a size of the adjusted thumbnail of the first window and a size of the adjusted thumbnail of the second window is equal to a size of the window group.

9. The method according to claim 3, wherein the first window is the window of the application; and
the method further comprises:
detecting, by the terminal device, a seventh operation performed by the user on the thumbnail of the first window, wherein the seventh operation is used to create a to-do notification corresponding to the first application; and
displaying, by the terminal device, the to-do notification corresponding to the first application in the first region in response to the seventh operation.

10. The method according to claim 3, wherein the second taskbar further comprises a function button (202) of an application list; and
the method further comprises:
detecting, by the terminal device, an operation performed by the user on the function button (202) of the application list;
displaying, by the terminal device, the application list in response to the operation performed by the user on the function button (202) of the application list, wherein the application list comprises an icon of at least one application, and the at least one application comprises the first application;
detecting, by the terminal device, an eighth operation performed by the user on the icon of the first application, wherein the eighth operation is used to create a to-do notification corresponding to the first application; and
displaying, by the terminal device, the to-do notification corresponding to the first application in the first region in response to the eighth operation.

11. The method according to any one of claims 1 to 10, wherein the method further comprises:
detecting, by the terminal device, a ninth operation performed by the user on the second taskbar, wherein the ninth operation is used to display an interface of an information center; and
displaying, by the terminal device, the interface of the information center in response to the ninth operation.

12. A terminal device (2100), comprising:
a detection module (2110), configured to detect a first operation performed by a user on a first window, wherein the first operation is used to minimize the first window, the first window is a window of an application or a window of a notification center, and an icon of a first application corresponding to the first window is displayed in a first taskbar; and
a processing module (2120), configured to minimize the first window into the icon of the first application in response to the first operation, wherein
the detection module (2110) is further configured to detect a second operation performed by the user on the first taskbar, wherein the second operation is used to expand the first taskbar; and
the processing module (2120) is further configured to expand the first taskbar in response to the second operation, to obtain a second taskbar, wherein the second taskbar comprises a thumbnail of all the windows shrunk into the first taskbar by using the first operation.

13. The terminal device (2100) according to claim 12, wherein the detection module (2110) is further configured to:
detect a third operation performed by the user on the first window, wherein the third operation is used to obtain function buttons of maximize, minimize, and close; and
the processing module (2120) is further configured to:
display the function buttons of maximize, minimize, and close in a region of the first window in response to the third operation.

14. The terminal device (2100) according to claim 12, wherein the first taskbar further comprises a function button (202) of a control center, the second taskbar comprises a first region and a second region, a window thumbnail of the notification center and the function button (202) of the control center are displayed in the first region, and a window thumbnail of the application is displayed in the second region.

15. The terminal device (2100) according to claim 14, wherein the first window is the window of the notification center, and the thumbnail of the first window is displayed in the first region; or the first window is the window of the application, and the thumbnail of the first window is displayed in the second region.

## Patentansprüche

1. Verfahren zur Desktopverwaltung eines Endgeräts, umfassend:
Erkennen (S301) durch ein Endgerät einer ersten Bedienung durch einen Benutzer an einem ersten Fenster, wobei die erste Bedienung zum Minimieren des ersten Fensters dient, das erste Fenster ein Fenster einer Anwendung oder ein Fenster eines Benachrichtigungszentrums ist und ein Symbol einer ersten Anwendung, das dem ersten Fenster entspricht, in einer ersten Taskleiste angezeigt wird;
Minimieren (S302) durch das Endgerät des ersten Fensters zu dem Symbol der ersten Anwendung als Reaktion auf die erste Bedienung;
Erkennen (S303) durch das Endgerät einer zweiten Bedienung des Benutzers an der ersten Taskleiste, wobei die zweite Bedienung dazu dient, die erste Taskleiste zu erweitern; und
Erweitern (S304) durch das Endgerät der ersten Taskleiste als Reaktion auf die zweite Bedienung, um eine zweite Taskleiste zu erhalten, wobei die zweite Taskleiste eine Miniaturansicht aller durch die erste Bedienung in die erste Taskleiste verkleinerten Fenster umfasst.

2. Verfahren nach Anspruch 1, wobei vor dem Erkennen (S301) durch das Endgerät der ersten Bedienung des Benutzers am ersten Fenster das Verfahren weiterhin umfasst:
Erkennen durch das Endgerät einer dritten Bedienung des Benutzers am ersten Fenster, wobei die dritte Bedienung dazu dient, Funktionsschaltflächen zum Maximieren, Minimieren und Schließen zu erhalten; und
Anzeigen durch das Endgerät der Funktionsschaltflächen zum Maximieren, Minimieren und Schließen in einem Bereich des ersten Fensters als Reaktion auf die dritte Bedienung.

3. Verfahren nach Anspruch 1, wobei die erste Taskleiste zudem eine Funktionsschaltfläche (202) eines Steuerzentrums umfasst, die zweite Taskleiste einen ersten und einen zweiten Bereich umfasst, eine Fenster-Miniaturansicht des Benachrichtigungszentrums und die Funktionsschaltfläche (202) des Steuerzentrums im ersten Bereich angezeigt werden und eine Fenster-Miniaturansicht der Anwendung im zweiten Bereich angezeigt wird.

4. Verfahren nach Anspruch 3, wobei das erste Fenster das Fenster des Benachrichtigungszentrums ist und die Miniaturansicht des ersten Fensters im ersten Bereich angezeigt wird; oder wobei das erste Fenster das Fenster der Anwendung ist und die Miniaturansicht des ersten Fensters im zweiten Bereich angezeigt wird.

5. Verfahren nach Anspruch 3, wobei das Verfahren weiterhin umfasst:
Erkennen durch das Endgerät einer vierten Bedienung des Benutzers am zweiten Bereich, wobei die vierte Bedienung dazu dient, die Anzeigeposition der Fenster-Miniaturansicht der Anwendung im zweiten Bereich zu verschieben; und
Verschieben durch das Endgerät die Anzeigeposition des Fenster-Thumbnails der Anwendung im zweiten Bereich als Reaktion auf die vierte Aktion.

6. Verfahren nach Anspruch 3, wobei das Verfahren ferner umfasst:
Erkennen durch das Endgerät einer fünften vom Benutzer im zweiten Bereich ausgeführten Aktion, wobei die fünfte Aktion dazu dient, das Fenster-Thumbnail der Anwendung im zweiten Bereich zu vergrößern oder zu verkleinern; und
Vergrößern oder Verkleinern durch das Endgerät des Fenster-Thumbnails der Anwendung im zweiten Bereich als Reaktion auf die fünfte Aktion.

7. Verfahren nach Anspruch 3, wobei der zweite Bereich weiterhin ein Thumbnail eines zweiten Fensters umfasst und das zweite Fenster einer zweiten Anwendung entspricht; und
das Verfahren umfasst ferner:
Erkennen durch das Endgerät einer sechsten vom Benutzer am Thumbnail des ersten Fensters ausgeführten Aktion, wobei die sechste Aktion dazu dient, das Thumbnail des ersten Fensters und das Thumbnail des zweiten Fensters zu einer Fenstergruppe zusammenzufassen;
Zusammenfassen durch das Endgerät des Thumbnails des ersten Fensters und des Thumbnails des zweiten Fensters zu der Fenstergruppe als Reaktion auf die sechste Aktion;
Erkennen durch das Endgerät einer Aktion des Vergrößerns, Verkleinerns oder Verschiebens der Fenstergruppe durch den Benutzer; und
Vergrößern, Verkleinern oder Verschieben durch das Endgerät der Fenstergruppe als Reaktion auf die Aktion des Vergrößerns, Verkleinerns oder Verschiebens der Fenstergruppe durch den Benutzer.

8. Verfahren nach Anspruch 7, wobei das Verfahren umfasst:
Erkennen durch das Endgerät einer Aktion zum Ändern der Größe des Thumbnails des ersten Fensters durch den Benutzer; und
Anpassen durch das Endgerät der Größe des Thumbnails des ersten Fensters als Reaktion auf die Aktion zum Ändern der Größe des Thumbnails des ersten Fensters durch den Benutzer und adaptive Anpassung der Größe des Thumbnails des zweiten Fensters, um eine angepasste Fenstergruppe zu erhalten, wobei die angepasste Fenstergruppe ein angepasstes Thumbnail des ersten Fensters und ein angepasstes Thumbnail des zweiten Fensters umfasst und die Summe der Größe des angepassten Thumbnails des ersten Fensters und der Größe des angepassten Thumbnails des zweiten Fensters der Größe der Fenstergruppe entspricht.

9. Verfahren nach Anspruch 3, wobei das erste Fenster das Fenster der Anwendung ist; und
das Verfahren umfasst ferner:
Erkennen durch das Endgerät einer siebten Aktion, die vom Benutzer auf das Vorschaubild des ersten Fensters ausgeführt wird, wobei die siebte Aktion dazu verwendet wird, eine Aufgabenbenachrichtigung zu erstellen, die der ersten Anwendung entspricht; und
Anzeige durch das Endgerät der Aufgabenbenachrichtigung, die der ersten Anwendung entspricht, in dem ersten Bereich als Reaktion auf die siebte Aktion.

10. Verfahren nach Anspruch 3, wobei die zweite Taskleiste weiterhin eine Funktionsschaltfläche (202) einer Anwendungsliste umfasst; und
das Verfahren umfasst weiterhin:
Erkennen durch das Endgerät einer vom Benutzer ausgeführten Aktion auf der Funktionsschaltfläche (202) der Anwendungsliste;
Anzeige durch das Endgerät der Anwendungsliste als Reaktion auf die vom Benutzer ausgeführte Aktion auf der Funktionsschaltfläche (202) der Anwendungsliste, wobei die Anwendungsliste ein Symbol von mindestens einer Anwendung umfasst und mindestens eine Anwendung die erste Anwendung umfasst;
Erkennen durch das Endgerät einer achten Aktion, die der Benutzer auf dem Symbol der ersten Anwendung ausführt, wobei die achte Aktion dazu verwendet wird, eine Aufgabenbenachrichtigung zu erstellen, die der ersten Anwendung entspricht; und
Anzeige durch das Endgerät der Aufgabenbenachrichtigung, die der ersten Anwendung entspricht, im ersten Bereich als Reaktion auf die achte Aktion.

11. Verfahren nach einem der Ansprüche 1 bis 10, wobei das Verfahren weiterhin umfasst:
Erkennen durch das Endgerät einer neunten Aktion, die vom Benutzer auf der zweiten Taskleiste ausgeführt wird, wobei die neunte Aktion dazu dient, eine Schnittstelle eines Informationszentrums anzuzeigen; und
Anzeige durch das Endgerät der Schnittstelle des Informationszentrums als Reaktion auf die neunte Aktion.

12. Ein Endgerät (2100), umfassend:
ein Erkennungsmodul (2110), konfiguriert zum Erkennen einer ersten vom Benutzer auf einem ersten Fenster ausgeführten Aktion, wobei die erste Aktion dazu verwendet wird, das erste Fenster zu minimieren, das erste Fenster ein Fenster einer Anwendung oder ein Fenster eines Benachrichtigungszentrums ist und ein Symbol einer ersten Anwendung, das dem ersten Fenster entspricht, in einer ersten Taskleiste angezeigt wird; und
ein Verarbeitungsmodul (2120), konfiguriert, das erste Fenster als Reaktion auf die erste Aktion in das Symbol der ersten Anwendung zu minimieren, wobei
das Erkennungsmodul (2110) weiterhin konfiguriert ist, eine zweite vom Benutzer auf der ersten Taskleiste ausgeführte Aktion zu erkennen, wobei die zweite Aktion dazu dient, die erste Taskleiste zu erweitern; und
Das Verarbeitungsmodul (2120) ist weiterhin dazu konfiguriert, die erste Taskleiste als Reaktion auf die zweite Bedienung zu erweitern, um eine zweite Taskleiste zu erhalten, wobei die zweite Taskleiste eine Miniaturansicht aller Fenster enthält, die durch die erste Bedienung in die erste Taskleiste reduziert wurden.

13. Das Endgerät (2100) gemäß Anspruch 12, wobei das Erkennungsmodule (2110) weiterhin dazu konfiguriert ist:
eine dritte Bedienung, die vom Benutzer am ersten Fenster durchgeführt wird, zu erkennen, wobei die dritte Bedienung dazu dient, Funktionsschaltflächen für Maximieren, Minimieren und Schließen bereitzustellen; und
Das Verarbeitungsmodul (2120) ist weiterhin dazu konfiguriert:
die Funktionsschaltflächen für Maximieren, Minimieren und Schließen als Reaktion auf die dritte Bedienung in einem Bereich des ersten Fensters anzuzeigen.

14. Das Endgerät (2100) gemäß Anspruch 12, wobei die erste Taskleiste ferner eine Funktionsschaltfläche (202) eines Kontrollzentrums umfasst, die zweite Taskleiste einen ersten Bereich und einen zweiten Bereich umfasst, eine Fensterminiaturansicht des Benachrichtigungszentrums sowie die Funktionsschaltfläche (202) des Kontrollzentrums im ersten Bereich angezeigt werden und eine Fensterminiaturansicht der Anwendung im zweiten Bereich angezeigt wird.

15. Das Endgerät (2100) gemäß Anspruch 14, wobei das erste Fenster das Fenster des Benachrichtigungszentrums ist und die Miniaturansicht des ersten Fensters im ersten Bereich angezeigt wird; oder wobei das erste Fenster das Fenster der Anwendung ist und die Miniaturansicht des ersten Fensters im zweiten Bereich angezeigt wird.

## Revendications

1. Un procédé de gestion du bureau d'un dispositif terminal comprenant :
détection (S301), par un dispositif terminal, d'une première opération effectuée par un utilisateur sur une première fenêtre, la première opération étant utilisée pour minimiser la première fenêtre, la première fenêtre constituant une fenêtre d'une application ou une fenêtre d'un centre de notification, et une icône d'une première application correspondant à la première fenêtre étant affichée dans une première barre des tâches ;
minimisation (S302), par le dispositif terminal, de la première fenêtre sous la forme de l'icône de la première application en réponse à la première opération ;
détection (S303), par le dispositif terminal, d'une seconde opération effectuée par l'utilisateur sur la première barre des tâches, la seconde opération étant utilisée pour étendre la première barre des tâches ; et
extension (S304), par le dispositif terminal, de la première barre des tâches en réponse à la seconde opération, afin d'obtenir une seconde barre des tâches, la seconde barre des tâches comprenant une vignette de toutes les fenêtres réduites dans la première barre des tâches en utilisant la première opération.

2. Le procédé selon la revendication 1, dans lequel, avant la détection (S301), par le dispositif terminal, de la première opération de l'utilisateur sur la première fenêtre, le procédé comprend de plus :
détection, par le dispositif terminal, d'une troisième opération effectuée par l'utilisateur sur la première fenêtre, la troisième opération étant utilisée pour obtenir les boutons de fonction d'agrandissement, de réduction et de fermeture ; et
affichage, par le dispositif terminal, des boutons de fonction d'agrandissement, de réduction et de fermeture dans une région de la première fenêtre en réponse à la troisième opération.

3. Le procédé selon la revendication 1, dans lequel la première barre des tâches comprend en outre un bouton de fonction (202) d'un centre de contrôle, la seconde barre des tâches comprend une première région et une seconde région, une vignette de fenêtre du centre de notification et le bouton de fonction (202) du centre de contrôle étant affichés dans la première région, et une vignette de fenêtre de l'application étant affichée dans la seconde région.

4. Le procédé selon la revendication 3, dans lequel la première fenêtre est la fenêtre du centre de notification, et la vignette de la première fenêtre est affichée dans la première région ;
ou la première fenêtre est la fenêtre de l'application, et la vignette de la première fenêtre est affichée dans la seconde région.

5. Le procédé selon la revendication 3, dans lequel le procédé comprend en outre :
détection, par le dispositif terminal, d'une quatrième opération effectuée par l'utilisateur sur la seconde région, la quatrième opération étant utilisée pour déplacer une position d'affichage de la vignette de fenêtre de l'application dans la seconde région ; et
déplacement, par le dispositif terminal, de la position d'affichage de la miniature de la fenêtre de l'application dans la deuxième région en réponse à la quatrième opération.

6. Procédé selon la revendication 3, dans lequel le procédé comprend en outre :
détection, par le dispositif terminal, d'une cinquième opération effectuée par l'utilisateur sur la deuxième région, la cinquième opération étant utilisée pour agrandir ou réduire la miniature de la fenêtre de l'application dans la deuxième région ; et
agrandissement ou réduction, par le dispositif terminal, de la miniature de la fenêtre de l'application dans la deuxième région en réponse à la cinquième opération.

7. Procédé selon la revendication 3, dans lequel la deuxième région comprend en outre une miniature d'une deuxième fenêtre, et la deuxième fenêtre correspond à une deuxième application ; et
le procédé comprend en outre :
détection, par le dispositif terminal, d'une sixième opération effectuée par l'utilisateur sur la miniature de la première fenêtre, la sixième opération étant utilisée pour faire en sorte que la miniature de la première fenêtre et la miniature de la deuxième fenêtre forment un groupe de fenêtres ;
création, par le dispositif terminal, du groupe de fenêtres à partir de la miniature de la première fenêtre et de la miniature de la deuxième fenêtre en réponse à la sixième opération ;
détection, par le dispositif terminal, d'une opération d'agrandissement, de réduction ou de déplacement du groupe de fenêtres par l'utilisateur ; et
agrandissement, réduction ou déplacement, par le dispositif terminal, du groupe de fenêtres en réponse à l'opération d'agrandissement, de réduction ou de déplacement du groupe de fenêtres par l'utilisateur.

8. Procédé selon la revendication 7, dans lequel le procédé comprend :
détection, par le dispositif terminal, d'une opération de modification de la taille de la miniature de la première fenêtre par l'utilisateur ; et
ajustement, par le dispositif terminal, de la taille de la miniature de la première fenêtre en réponse à l'opération de modification de la taille de la miniature de la première fenêtre par l'utilisateur, et ajustement adaptatif de la taille de la miniature de la deuxième fenêtre pour obtenir un groupe de fenêtres ajusté, le groupe de fenêtres ajusté comprenant une miniature ajustée de la première fenêtre et une miniature ajustée de la deuxième fenêtre, et la somme des tailles de la miniature ajustée de la première fenêtre et de la miniature ajustée de la deuxième fenêtre étant égale à la taille du groupe de fenêtres.

9. Procédé selon la revendication 3, dans lequel la première fenêtre est la fenêtre de l'application ; et
le procédé comprend en outre :
détecter, par l'appareil terminal, une septième opération effectuée par l'utilisateur sur la vignette de la première fenêtre, la septième opération servant à créer une notification de tâche à faire correspondant à la première application ; et
afficher, par l'appareil terminal, la notification de tâche à faire correspondant à la première application dans la première région en réponse à la septième opération.

10. Le procédé selon la revendication 3, dans lequel la deuxième barre des tâches comprend en outre un bouton fonction (202) d'une liste d'applications ; et
le procédé comprend en outre :
détecter, par l'appareil terminal, une opération effectuée par l'utilisateur sur le bouton fonction (202) de la liste d'applications ;
afficher, par l'appareil terminal, la liste d'applications en réponse à l'opération effectuée par l'utilisateur sur le bouton fonction (202) de la liste d'applications, où la liste d'applications comprend une icône d'au moins une application, et ladite au moins une application comprend la première application ;
détecter, par l'appareil terminal, une huitième opération effectuée par l'utilisateur sur l'icône de la première application, la huitième opération servant à créer une notification de tâche à faire correspondant à la première application ; et
afficher, par l'appareil terminal, la notification de tâche à faire correspondant à la première application dans la première région en réponse à la huitième opération.

11. Le procédé selon l'une quelconque des revendications 1 à 10, dans lequel le procédé comprend en outre :
détecter, par l'appareil terminal, une neuvième opération effectuée par l'utilisateur sur la seconde barre des tâches, la neuvième opération servant à afficher une interface d'un centre d'information ; et
afficher, par l'appareil terminal, l'interface du centre d'information en réponse à la neuvième opération.

12. Un appareil terminal (2100), comprenant :
un module de détection (2110) configuré pour détecter une première opération effectuée par un utilisateur sur une première fenêtre, la première opération servant à minimiser la première fenêtre, la première fenêtre étant une fenêtre d'une application ou une fenêtre d'un centre de notification, et une icône d'une première application correspondant à la première fenêtre étant affichée dans une première barre des tâches ; et
un module de traitement (2120), configuré pour minimiser la première fenêtre dans l'icône de la première application en réponse à la première opération, dans lequel
le module de détection (2110) étant en outre configuré pour détecter une deuxième opération effectuée par l'utilisateur sur la première barre des tâches, la deuxième opération servant à développer la première barre des tâches ; et
le module de traitement (2120) est en outre configuré pour développer la première barre des tâches en réponse à la deuxième opération, afin d'obtenir une deuxième barre des tâches, la deuxième barre des tâches comprenant une vignette de toutes les fenêtres réduites dans la première barre des tâches à l'aide de la première opération.

13. Le dispositif terminal (2100) selon la revendication 12, dans lequel le module de détection (2110) est en outre configuré pour :
détecter une troisième opération effectuée par l'utilisateur sur la première fenêtre, la troisième opération étant utilisée pour obtenir les boutons de fonction d'agrandissement, de réduction et de fermeture ; et
le module de traitement (2120) est en outre configuré pour :
afficher les boutons de fonction d'agrandissement, de réduction et de fermeture dans une zone de la première fenêtre en réponse à la troisième opération.

14. Le dispositif terminal (2100) selon la revendication 12, dans lequel la première barre des tâches comprend en outre un bouton de fonction (202) d'un centre de contrôle, la deuxième barre des tâches comprend une première région et une deuxième région, une vignette de fenêtre du centre de notifications et le bouton de fonction (202) du centre de contrôle sont affichés dans la première région, et une vignette de fenêtre de l'application est affichée dans la deuxième région.

15. Le dispositif terminal (2100) selon la revendication 14, dans lequel la première fenêtre est la fenêtre du centre de notifications et la vignette de la première fenêtre est affichée dans la première région ; ou la première fenêtre est la fenêtre de l'application et la vignette de la première fenêtre est affichée dans la deuxième région.
